# EUROPEAN PATENT SPECIFICATION

(11) **EP 3 604 984 B1**
(45) Date of publication and mention of the grant of the patent: **06.03.2024**
(21) Application number: 19189919.4
(22) Date of filing: 02.08.2019
(51) Int. Cl.: F25C 5/182, F25D 23/06, F25C 1/12, F25C 5/187, G01F 23/296, G01S 15/08, G01S 15/88

(54) **ICE MAKER AND METHOD OF MANUFACTURING AN ICE MAKER**
EISERZEUGER UND VERFAHREN ZUR HERSTELLUNG EINES EISERZEUGERS
MACHINE DE PRODUCTION DE GLAÇONS ET PROCÉDÉ DE FABRICATION D'UNE MACHINE DE PRODUCTION DE GLAÇONS

(30) Priority: 03.08.2018 US 201862714412 P; 03.08.2018 US 201862714414 P; 01.08.2019 US 201916529047; 01.08.2019 US 201916529055
(43) Date of publication of application: 05.02.2020
(60) Divisional application: 24154001.2
(73) Proprietor: Hoshizaki America, Inc., Peachtree City, GA 30269 (US)
(72) Inventor: HUCKABY, Sandra A., Newnan, GA Georgia 30265 (US); WELLS, Matthew W., Sharpsburg, GA Georgia 30277 (US); PETERSON, Kim, Warm Springs, GA 31830 (US); CLAYTON JR, Luther L., Hogansville, GA Georgia 30230 (US); SAKAKIBARA, Hideki, Peachtree City, GA Georgia 30269 (US); WAHEED, Abdul, Jonesboro, GA Georgia 30238 (US); PERRY, Timothy, Senoia, GA Georgia 30276 (US); MELTON, Glenn, Fayetteville, GA Georgia 30215 (US); RELOVA, Jeremy, Peachtree City, GA Georgia 30269 (US)
(74) Representative: Page White Farrer

(56) References cited:
- WO-A1-2018/098110
- GB-A- 1 216 693
- US-A- 5 245 841
- US-A1- 2016 138 846

## Description

### TECHNICAL FIELD

This disclosure relates to ice machines. More specifically, this invention relates to an ice maker and a method of manufacturing an ice maker.

### BACKGROUND

A typical ice maker-and in particular a commercial ice maker configured to produce a high volume of ice for hours, days, and years on end-has at least four circuits not considering a structure of the ice machine itself: a refrigeration circuit circulating refrigerant, an air circuit or a water circuit circulating cooling air or water through the refrigeration circuit and in some aspects as part of the refrigeration circuit, a water circuit circulating water for forming ice and sometimes for cleaning the ice maker, and an electrical circuit circulating electrical current. It is usually important to separate the three circuits in that, for example, the water of either of the water circuits must not leak into the electrical circuit or into foam insulating walls of the refrigeration circuit; hot air must not leak into areas where cool air and water facilitate the forming of ice; and electricity must not leak into the water and vice versa. In assembling the ice maker to an ice storage bin, even more complexities are introduced. In order to separate the various circuits and at the same time facilitate harmonious interactions therebetween, it can be advantageous to consistently and tightly assemble the various subparts of the ice machine while at the same time isolating where appropriate the subparts from each other.

The care necessary to build an ice maker that will withstand the challenging environment in which it often operates can add significant cost and complexity to the ice maker and its use. For example only, the use of additional materials and fasteners to bond or assemble parts of an ice maker can require significantly more labor and require special skills. In addition, an ice maker cleaning procedure that does not consider these same factors can require manual interventions by a user, which can take the user from other responsibilities.

WO 2018/098110 discloses an ice maker evaporator assembly having an evaporator pan with a back wall and left, right, top and bottom sidewalls extending from the back wall, and a freeze plate located within the evaporator pan. A serpentine tubing is thermally coupled to the back wall of the evaporator pan opposite the left, right, top and bottom sidewalls. A first layer of insulation is formed on the serpentine tubing. An evaporator housing having a housing back wall and housing left, right, top and bottom sidewalls extending from the housing back wall is attached to the evaporator pan and covers serpentine tubing. A second layer of insulation is formed on top of the first layer of insulation

### SUMMARY

It is to be understood that this summary is not an extensive overview of the disclosure. This summary is exemplary and not restrictive, and it is intended to neither identify key or critical elements of the disclosure nor delineate the scope thereof. The sole purpose of this summary is to explain and exemplify certain concepts of the disclosure as an introduction to the following complete and extensive detailed description.

Disclosed is an ice maker comprising: a dry compartment; and a wet compartment adjacent to the dry compartment and comprising: an evaporator case sized to receive an evaporator, the evaporator case comprising: a plurality of interior panels joined to each other with snap-fit joints, each of the snap-fit joints comprising a tab and defining a slot, each of a plurality of seams formed between the interior panels defining a foam-tight seal and a water-tight seal; and a plurality of exterior panels, each of the plurality of exterior panels joined to a mating interior panel of the plurality of interior panels with slide joints, wherein the evaporator case is integrally insulated with blown foam insulation positioned inside an insulation cavity defined by and between the plurality of exterior panels and the plurality of interior panels and the exterior panels and the interior panels together define a plurality of overflow insulation cavities, wherein a standing rib and a wall body of a respective interior panel and an interior surface of the exterior panel define a respective overflow insulation cavity of the plurality of overflow insulation cavities, wherein the respective overflow insulation cavity is arranged such that the flow of blown foam from the insulation cavity into the respective overflow insulation cavity flows through a pair of gaps.

Also disclosed is a method of manufacturing an ice maker, the method comprising: assembling a plurality of interior panels of an evaporator case to each other with snap-fit joints by inserting a tab of each snap-fit j oint into a corresponding slot of the snap-fit j oint; forming a foam-tight seal and a water-tight seal at seams defined by connections between the interior panels; assembling a plurality of exterior panels to the interior panels with slide joints by inserting a lip of each slide joint into a corresponding groove of the slide joint, the groove defined at least in part by one of a plurality of sloped projections defined in a respective interior panel; and insulating the evaporator case with blown foam insulation positioned inside an insulation cavity defined by and between the plurality of exterior panels and the plurality of interior panels and the interior panels together define a plurality of overflow insulation cavities, wherein a standing rib and a wall body of a respective interior panel and an interior surface of the exterior panel define a respective overflow insulation cavity of the plurality of overflow insulation cavities, wherein the respective overflow insulation cavity is arranged such that the flow of blown foam from the insulation cavity into the respective overflow insulation cavity flows through a pair of gaps.

.

Various implementations described in the present disclosure may comprise additional systems, methods, features, and advantages, which may not necessarily be expressly disclosed herein but will be apparent to one of ordinary skill in the art upon examination of the following detailed description and accompanying drawings. It is intended that all such systems, methods, features, and advantages be included within the present disclosure and protected by the accompanying claims. The features and advantages of such implementations may be realized and obtained by means of the systems, methods, features particularly pointed out in the appended claims. These and other features will become more fully apparent from the following description and appended claims.

### BRIEF DESCRIPTION OF THE DRAWINGS

The accompanying drawings, which are incorporated in and constitute a part of this specification, illustrate several aspects of the disclosure and together with the description, serve to explain various principles of the disclosure. The drawings are not necessarily drawn to scale. Corresponding features and components throughout the figures may be designated by matching reference characters for the sake of consistency and clarity.
FIG. 1 is a front perspective view of an ice machine comprising an ice maker and a storage bin in accordance with one aspect of the present disclosure.
FIG. 2A is a front perspective view of the ice maker of Figure 1 with an outer casing of the ice maker removed.
FIG. 2B is a front perspective view of the ice maker of Figure 1 with a front insulation and a top insulation of an evaporator case of the ice maker as well as a base case cover of a compressor base of the ice maker further removed.
FIG. 2C is a front perspective exploded view of a spray tube, a water pump, and other components of a water circuit 450 of the ice maker of Figure 1.
FIG. 3 is a circuit diagram showing a refrigeration circuit and the water circuit of the ice maker of Figure 1.
FIG. 4 is a perspective view of an exemplary ice cube produced by the ice maker of Figure 1.
FIG. 5A is a front perspective view of the evaporator case of Figure 2B.
FIG. 5B is a sectional side view of the evaporator case of Figure 2B taken along line 5B-5B shown in Figure 5A.
FIG. 6A is a perspective view of a float switch within a tank of the evaporator case of Figure 5A.
FIG. 6B is a perspective view of a float switch mount of Figure 6A.
FIG. 6C is a rear view of the float switch mount of Figure 6A.
FIG. 7 is a detail sectional view of the evaporator case of Figure 5A, with a lip of the front insulation engaging the top insulation.
FIG. 8 is a detail sectional view of the evaporator case of Figure 5A, with the lip of the front insulation engaging a top tank end of the tank.
FIG. 9 is a detail sectional view of the evaporator case of Figure 5A, with a lip of an evaporator wall of the evaporator case engaging a rear insulation end of the top insulation.
FIG. 10 is a front perspective view of the evaporator case of Figure 5A in a partially assembled condition with the top insulation partially removed or disengaged.
FIG. 11 is a front perspective view of the evaporator case of Figure 5A with the top insulation seated nearly into position between the evaporator walls but not yet secured to the evaporator walls.
FIG. 12 is a detail front perspective view of the evaporator case of Figure 5A with the top insulation fully seated.
FIG. 13 is a front top perspective view of the evaporator case of Figure 5A with the front insulation and the top insulation removed.
FIG. 14 a detail front top perspective view of the tank of the evaporator case of Figure 5A taken from detail 14 of Figure 13.
FIG. 15 is a top perspective view of the evaporator case of Figure 5A with the spray tube removed.
FIG. 16 is a front perspective view of the evaporator case of Figure 5A with the spray tube, the water pump, and insulated tubing of the ice maker removed.
FIG. 17 is a top view of the spray tube of Figure 2C.
FIG. 18 is a detail front perspective view of the evaporator case of Figure 5A taken from detail 18 of Figure 13 and showing a manifold end of the spray tube of Figure 17.
FIG. 19 is a detail bottom perspective view of the spray tube of Figure 17 showing the manifold end and shown assembled with a supply tube of the water circuit.
FIG. 20 is a detail bottom perspective view of the spray tube of Figure 17 with the supply tube removed.
FIG. 21 is a side perspective view of the spray tube of Figure 17.
FIG. 22 is a detail front perspective view of the evaporator case of Figure 5A showing the top insulation, an evaporator bracket, and the evaporator walls.
FIG. 23 is a detail front perspective view of the evaporator case of Figure 5A showing the evaporator bracket partially removed or disengaged from the evaporator walls.
FIG. 24 is a detail perspective view of the evaporator case of Figure 5A showing a first pocket of the evaporator wall of Figure 23.
FIG. 25 is an upward-looking bottom perspective view of the evaporator bracket of Figure 22.
FIG. 26 is a detail front corner perspective view of the ice maker of Figure 1 with the front panel assembly of the outer casing removed and before assembly of the evaporator case.
FIG. 27 is a detail perspective view of the ice maker of Figure 26 focusing on a top panel end of a left side panel of the evaporator case.
FIG. 28A is a perspective view of a second pocket of the evaporator wall of the evaporator case of Figure 5A.
FIG. 28B is a detail sectional view of the evaporator case of Figure 5A taken from line 28B-28B of Figure 28A showing a top panel end of the left side panel assembled to the evaporator wall of the evaporator case.
FIG. 29A is a detail perspective view of the evaporator case of Figure 5A showing a bottom horizontal lip of the left side panel of the evaporator case and a groove defined by the tank base.
FIG. 29B is a detail sectional view of the evaporator case of Figure 5A taken from line 29B-29B of Figure 29A showing a bottom panel end of the left side panel assembled to the evaporator wall of the evaporator case.
FIG. 29C is a detail perspective view of a portion of an inside of a generic aspect of an insulated wall of the ice maker of Figure 1.
FIG. 29D is a sectional perspective view of an evaporator compartment of the evaporator case of Figure 5A looking toward the back panel of the evaporator case.
FIG. 29E is a top sectional perspective view of the evaporator compartment looking downwards toward the tank.
FIG. 30 is a top view of a tank base of the evaporator case of Figure 5A.
FIG. 31 is a rear perspective view of the evaporator case of the evaporator case of Figure 5A and a liner of the compressor base of Figure 2B with the rear panel and an interior side panel shown attached to the evaporator case.
FIG. 32 is a front top exploded perspective view of the evaporator walls and the tank of the evaporator case of Figure 5A.
FIG. 33 is a detail front exploded perspective view of the tank and the bottom wall ends of the evaporator walls taken from detail 33 of Figure 32.
FIG. 34 a detailed exploded perspective view of the tank and the bottom wall end of the evaporator wall of the evaporator case of Figure 5A.
FIG. 35 is a detail perspective view of the bottom wall end of the evaporator wall and the top tank end of the tank secured together.
FIG. 36A is a rear exploded perspective view of the evaporator walls and the tank of the evaporator case of Figure 5A during assembly.
FIG. 36B a rear perspective view of the evaporator walls and the tank of Figure 36 after assembly.
FIG. 37A is a detail sectional view of a lip of a bottom wall end of the evaporator wall engaged with a groove of a top tank end of the tank of Figure 34 at a position between a tab-slot combination.
FIG. 37B is a detail sectional view of the structure shown in Figure 37A at a position of the tab-slot combination.
FIG. 38 is a bottom perspective view of the bottom maker end of the ice maker of Figure 1.
FIG. 39 is a front view of the ice maker of Figure 1.
FIG. 40 is a front side perspective view of the ice maker of Figure 1 with the front panel assembly removed, exposing the control box.
FIG. 41 is an operational flowchart showing the overall operation of a controller of the ice maker of Figure 1.
FIG. 42 is a first cleaning flowchart showing a first stage in a process of either cleaning or sanitizing the ice maker of Figure 1.
FIG. 43 is a second cleaning flowchart showing a second stage in the process of either cleaning or sanitizing the ice maker of Figure 1.

### DETAILED DESCRIPTION

The present disclosure can be understood more readily by reference to the following detailed description, examples, drawings, and claims, and the previous and following description. It is also to be understood that the terminology used herein is for the purpose of describing particular aspects only and is not intended to be limiting.

As used throughout, the singular forms "a," "an" and "the" include plural referents unless the context clearly dictates otherwise. Thus, for example, reference to "an element" can include two or more such elements unless the context indicates otherwise. In addition, any of the elements described herein can be a first such element, a second such element, and so forth (e.g., a first widget and a second widget, even if only a "widget" is referenced).

The word "or" as used herein means any one member of a particular list and also includes any combination of members of that list. The phrase "at least one of A and B" as used herein means "only A, only B, or both A and B"; while the phrase "one of A and B" means "A or B."

To simplify the description of various elements disclosed herein, the conventions of "left," "right," "front," "rear," "top," "bottom," "upper," "lower," "inside," "outside," "inboard," "outboard," "horizontal," and/or "vertical" may be referenced. Unless stated otherwise, "front" describes that end of an ice machine nearest to and occupied by a user of the ice machine; "rear" is that end that is opposite or distal the front; "left" is that which is to the left of or facing left from a person standing in front of the ice machine and facing toward the front; and "right" is that which is to the right of or facing right from that same person. "Horizontal" or "horizontal orientation" describes that which is in a plane extending from left to right and aligned with the horizon. "Vertical" or "vertical orientation" describes that which is in a plane that is angled at 90 degrees to the horizontal.

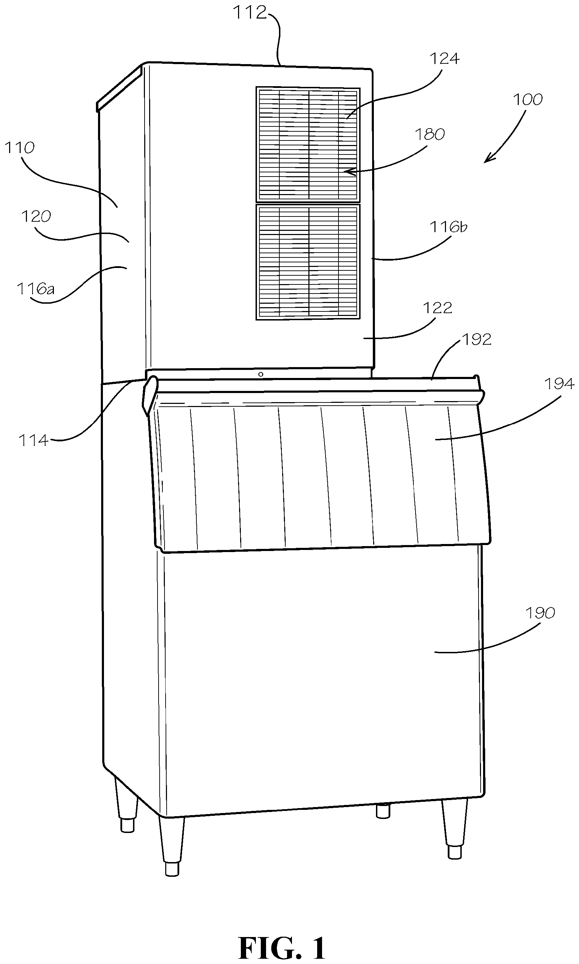

Figure 1 is a front perspective view of an ice machine 100 in accordance with one aspect of the present disclosure. The ice machine 100 can comprise an ice maker 110 and a storage bin 190. The ice maker 110 can be configured to produce ice which can be fed by gravity downwards into the storage bin 190. The storage bin 190 can be insulated to maintain cold temperatures within the bin storage compartment to prevent the ice from melting. In some aspects, the storage bin 190 can be refrigerated, and in other aspects, the storage bin 190 can be unrefrigerated.

The ice maker 110 can comprise an outer casing 120, which can be configured to enclose the ice maker 110 and its internal components. As shown, the outer casing can comprise a front panel assembly 122. The front panel assembly 122 can extend from a top maker end 112 to a bottom maker end 114 of the ice maker 110, and from a left maker side 116a to a right maker side 116b of the ice maker 110. The front panel assembly 122 can define an air inlet opening 180 and can comprise an air filter 124. The air inlet opening 180 and the air filter 124 can be configured to provide ventilation for the ice maker 110 in the form of clean air from outside the ice maker 110.

The storage bin 190 can define a top bin end 192, on which the bottom maker end 114 of the ice maker 110 can be mounted. The storage bin 190 can comprise a bin door 194 located proximate to the top bin end 192, and the bin door 194 can provide access to a bin storage compartment (not shown) defined within the storage bin 190.

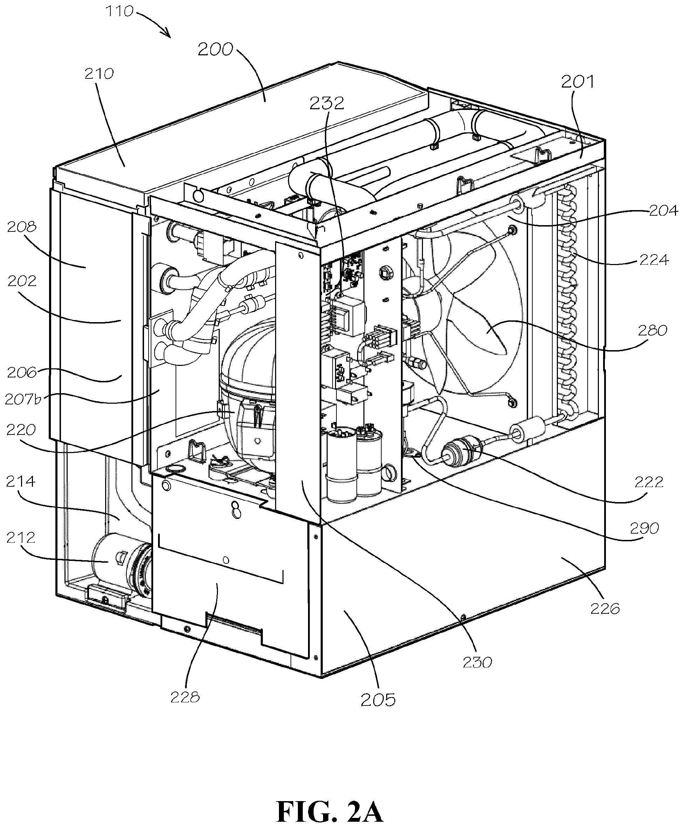

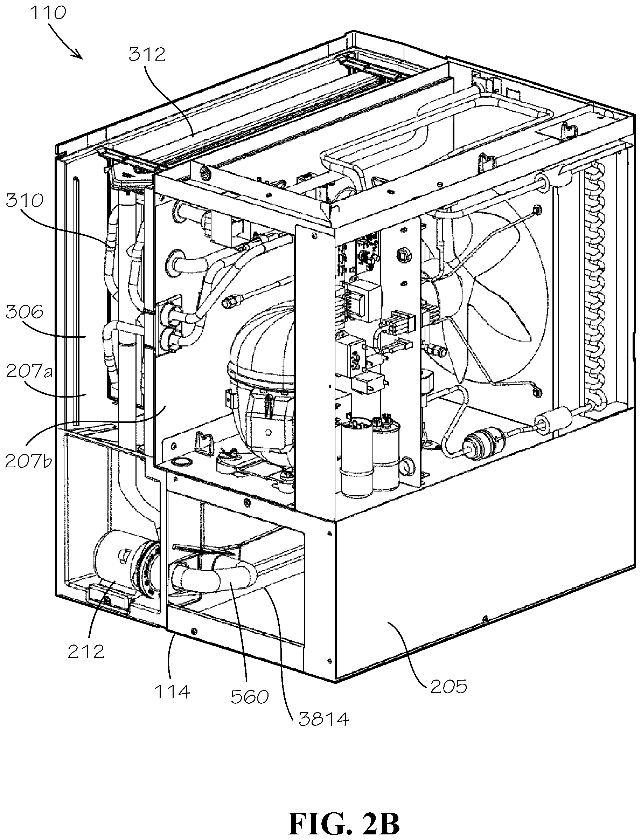

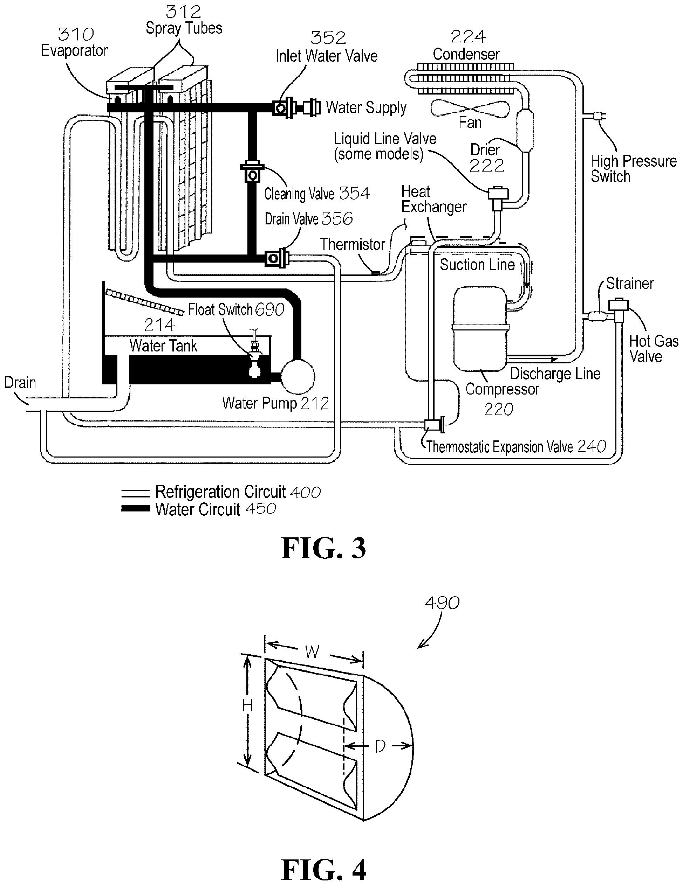

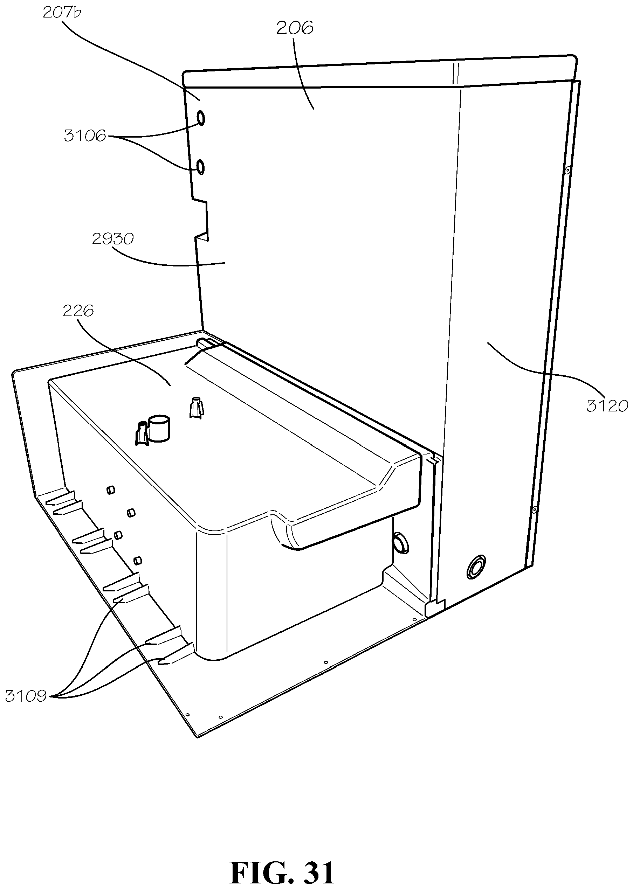

Figure 2A is a front perspective view of the ice maker 110 of Figure 1 with the outer casing 120 (shown in Figure 1) removed. In the present aspect, the ice maker 110 can be an air-cooled model, which can be cooled by circulating air through the outer casing 120, such as through the air inlet opening 180 (shown in Figure 1). In some aspects, the ice maker 110 can be a water-cooled model or can be coupled to a remote condensing unit for cooling. In the present aspect, the ice maker 110 can comprise a fan assembly 280, which can be configured to circulate air through the ice maker 110. Beneath or inside the outer casing 120, the ice maker 110 and a body 200 thereof can be compartmentalized into a wet compartment 202 and a dry compartment 204 and can further comprise a frame 201 and a base case 205. The wet compartment 202 can be primarily defined by an evaporator case 206, which can be insulated. The evaporator case 206 can enclose the majority of the components of a water circuit 450 (shown in Figure 3) of the ice maker 110, which can be configured to form ice from liquid water delivered to and circulating through the ice maker 110. An evaporator compartment 306 (shown in Figure 2B) of the evaporator case 206 can be insulated. The evaporator case 206 can comprise a removable front insulation 208 and a removable top insulation 210, for example and without limitation, which can partially enclose and insulate the evaporator compartment 306. Either of the front insulation 208 or the top insulation 210 can be a panel or an insulation panel. Additionally, a tank 214-which can be a water tank- and evaporator walls 207a,b (207a shown in Figure 2B) of the evaporator case 206 can be integrally insulated as further discussed below. By "integrally insulated," walls of the ice maker 110 can be filled with liquid foam insulation while the ice maker 110 or an insulated portion thereof is supported inside a foaming jig or mold. Such insulation can be, for example and without limitation, a water-blown or refrigerant-blown high-pressure or low-pressure foam that flows through the walls of the ice maker 110 and hardens and cures, which can result in the walls developing insulating properties. The pressure of such foam can reach as much as 14 psi (approximately 0.097 MPa) or more above atmospheric pressure. Each of the tank 214, the evaporator walls 207a,b, and any other panel forming a portion of an interior of the evaporator case 206 or the base case 205-such as, for example and without limitation, a molded interior panel of a compressor base 226 shown in Figure 31-can be an interior panel.

The water circuit 450 can comprise a water pump 212, which can be mounted on or adjacent to the tank 214 in a location external to the evaporator compartment 306. A portion of the tank 214 enclosing the water pump 212 can be uninsulated. The tank 214 can be positioned beneath the evaporator walls 207a,b. The water pump 212 can be configured to pump water from the tank 214 upwards into the evaporator compartment 306 where the water can be formed into ice.

Within the dry compartment 204, the majority of the components of a refrigeration circuit 400 (shown in Figure 3) of the ice maker 110 can be enclosed, including a compressor 220, a drier 222, and a condenser 224, for example and without limitation. The compressor 220 can be mounted to the compressor base 226, which can comprise a horizontal compressor base panel to which the compressor can be more directly mounted. The compressor base 226 can comprise a base case cover 228. Within the dry compartment 204, refrigerant flowing through the refrigeration circuit 400 can be compressed by the compressor 220 and then cooled into a liquid state in the condenser 224 before being fed through an expansion device 240 (shown in Figure 3), such as a thermostatic expansion valve, before being fed into an evaporator 310 housed inside the evaporator compartment 306. Additionally, a control box 230 of the ice maker 110, which can comprise a controller 232, can be housed within the dry compartment 204. The controller 232 can be a control board.

An ultrasonic bin sensor 290 can be installed within the dry compartment 204 and can extend through the compressor base 226. The ultrasonic bin sensor 290 can be configured to monitor a level of ice cubes 490 (shown in Figure 4) accumulated within the storage bin 190 (shown in Figure 1). The ultrasonic bin sensor 290 can act as a proximity sensor by transmitting ultrasonic waves downwards toward the ice and receiving the ultrasonic waves, which reflect off the ice cubes 490. The distance from a level position defined by an outlet of the ultrasonic bin sensor 290 to a level position defined by the level of the ice cubes 490 can be determined from the travel times of the returning ultrasonic waves. The ultrasonic bin sensor 290 can be in electronic communication with the control box 230. Once the level of the ice cubes 490 in the storage bin 190 reaches a shut-off height, which can be a predetermined value as desired and set by a technician or a user of the ice maker 110, a signal from the ultrasonic bin sensor 290 can be received by the control box 230, and the control box 230 can cease the ice making process, thereby stopping further production of the ice cubes 490. As the ice melts or ice is removed from the storage bin 190, the level can reach a refill height. Once the level of the ice cubes 490 within the storage bin 190 reaches the refill height, the ultrasonic bin sensor 290 can send a signal to the control box 230, and the control box 230 can resume the ice making process to refill the storage bin 190 with the ice cubes 490. The "full" height or level can be a predetermined value as desired and set by a technician or a user of the ice maker 110, or the "full" height can be programmed into the controller 232.

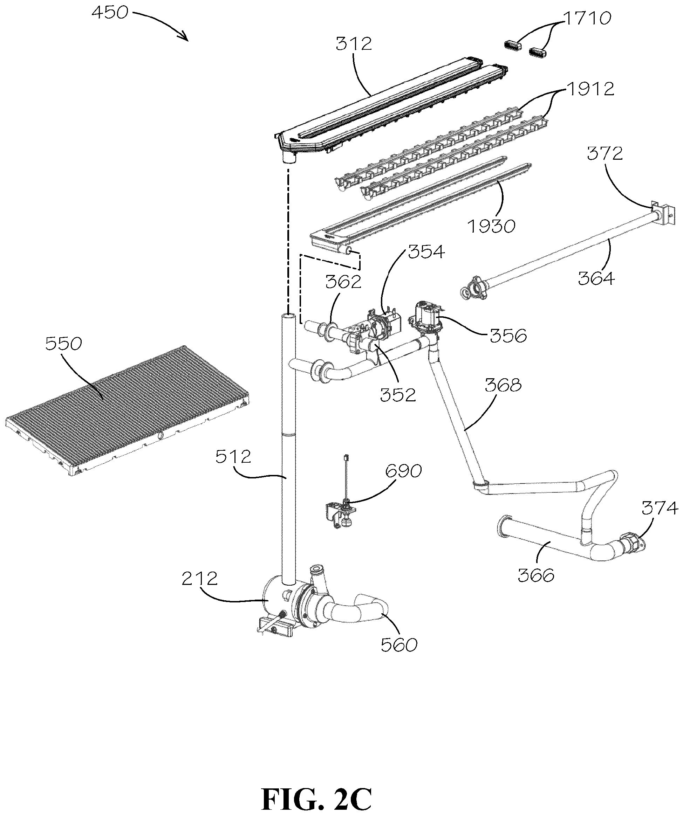

Figure 2B is a front perspective view of the ice maker 110 of Figure 2 with the front insulation 208 and top insulation 210 of the evaporator case 206 and the base case cover 228 of the compressor base 226 further removed. With the front insulation 208 and the top insulation 210 removed, the evaporator compartment 306 can be exposed. The evaporator 310 and a spray tube 312 can be enclosed within the evaporator compartment 306 between the evaporator walls 207a,b. The spray tube 312 can be positioned proximate to a top end of the evaporator case 206 and above the evaporator 310 and coupled to the evaporator 310.

The refrigeration circuit 400 can comprise the evaporator 310, and the liquid refrigerant can evaporate to a gaseous phase within the evaporator 310, thereby cooling the evaporator compartment 306 below the freezing temperature of water. Liquid water can be pumped by the water pump 212 up to the spray tube 312, where the liquid water can be sprayed toward the evaporator 310 to form ice. A suction hose 560 can connect the water pump 212 to the tank 214 to provide a source of water from which to produce the ice. The body 200 and specifically at least the base case 205 can define a bottom opening 3814 at the bottom maker end 114 of the ice maker 110.

Figure 2C shows a front perspective exploded view of the spray tube 312, the water pump 212, and other components of the water circuit 450. The water circuit 450 can comprise one or more valves 350, each of which can be a solenoid valve operated by the controller 232. More specifically, the water circuit 450 can comprise an inlet water valve 352, a cleaning valve 354, and a drain valve 356. The water circuit 450 can comprise a supply tube 1930, which can be coupled to the inlet water valve 352 and the cleaning valve 354 with a supply tube inlet pipe 362. Meanwhile, the inlet water valve 352 can be in fluid communication with water entering the ice maker 110 at a water inlet 372 and through an inlet water valve inlet pipe 364. The water circuit 450 can comprise a drain pipe or drain hose 366, which can be coupled to the drain valve 356 with a drain valve outlet pipe 368 and can allow water to drain from the ice maker 110 at a water outlet 374. The water circuit 450 can comprise a float switch 690.

Figure 3 is a circuit diagram showing the interaction and interconnections between each of various components of the refrigeration circuit 400 and each of various components of the water circuit 450 of the ice maker 110 of Figure 1.

Figure 4 shows a perspective view of the ice cube 490 in one exemplary aspect. In some aspects, as shown, the ice cube 490 can define a crescent shape, at least in part. In some aspects, the ice cube 490 can define a non-crescent shape. The ice cube 490 can define a height H, a width W, and a depth D. In some aspects, the height H can measure approximately 1.5 inches (approximately 38.1 millimeters), the width W can measure approximately 1.125 inches (approximately 28.6 mm), and the depth D can measure approximately 0.5 inches (approximately 12.7 mm). In other aspects, the ice cube 490 can measure smaller or larger in any dimension and can have a variable shape such that the ice cubes 490 are not identical.

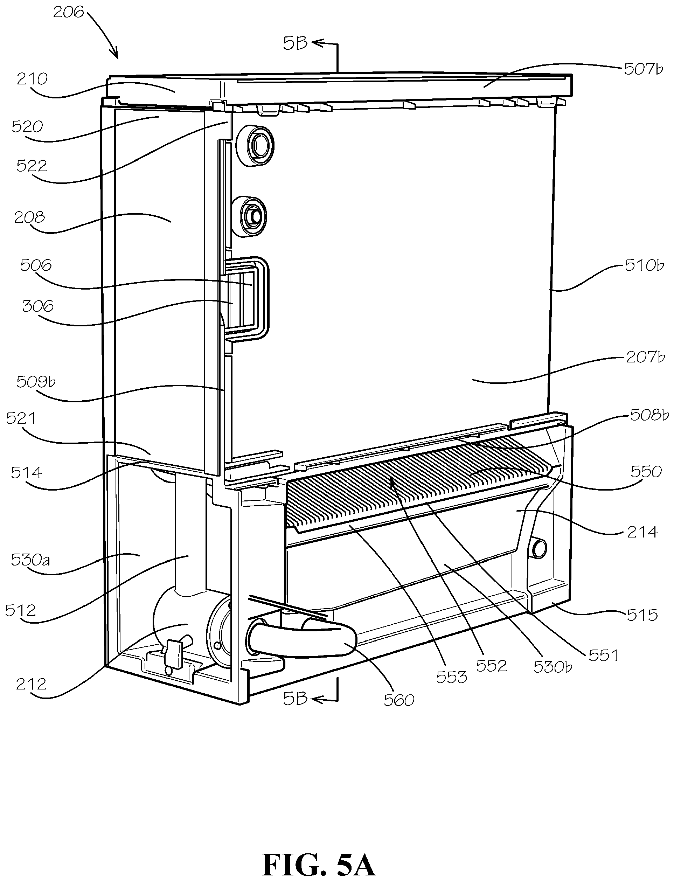

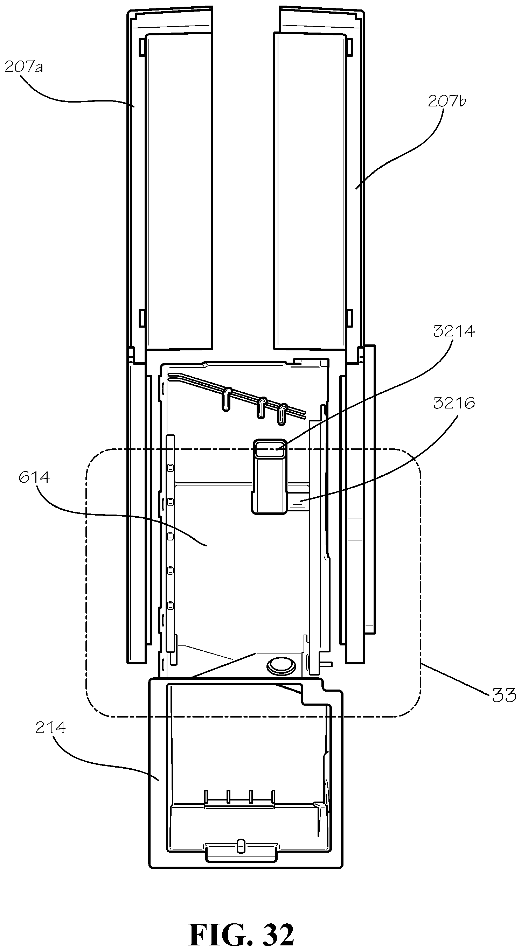

Figure 5A is a front perspective view of the evaporator case 206 of Figure 2. As shown, the evaporator wall 207b can define a refrigeration port 506, which can be defined in and extend through the evaporator wall 207b to the evaporator compartment 306. The refrigerator port 506 can provide access for lines of the refrigeration circuit 400 (shown in Figure 3) to reach the evaporator 310 (shown in Figure 2B). The evaporator wall 207b can define a top wall end 507b and a bottom wall end 508b disposed opposite from the top wall end 507b. The tank 214 can define a top tank end 514 and a bottom tank end 515 disposed opposite from the top tank end 514. The top tank end 514 can be attached to the bottom wall end 508b by a snap or snap-fit connection, as shown and further described below with respect to Figures 32-36B. The top insulation 210 can rest upon the top wall end 507b, and the top insulation 210 can horizontally slide inwards and outwards from between the evaporator walls 207a,b (207a shown in Figure 2B).

The tank 214 can define an outer tank side 530a and an inner tank side 530b disposed opposite from the outer tank side 530a. The inner tank side 530b can be substantially aligned with the evaporator wall 207b. The tank 214 can comprise or can be at least partly covered or enclosed by a removable cube guide 550 disposed proximate to the top tank end 514. The cube guide 550 can slope downwards from the outer tank side 530a to the inner tank side 530b. The cube guide 550 can lead to the cube opening 552 defined by the inner tank side 530b. The cube guide 550 can be slid into the tank 214 by slipping the cube guide 550 through the cube opening 552 until the cube guide 550 sets behind or below a lip 553 of the cube opening 552. To remove the cube guide 550, the cube guide 550 can be lifted over the lip 553 and slid outwards from the tank 214 through the cube opening 552. The cube guide 550 can define a hole 551, which can facilitate removal of the cube guide 550. A user, for example, can slip a finger through the hole 551 to aid in lifting the cube guide 550 over the lip 553.

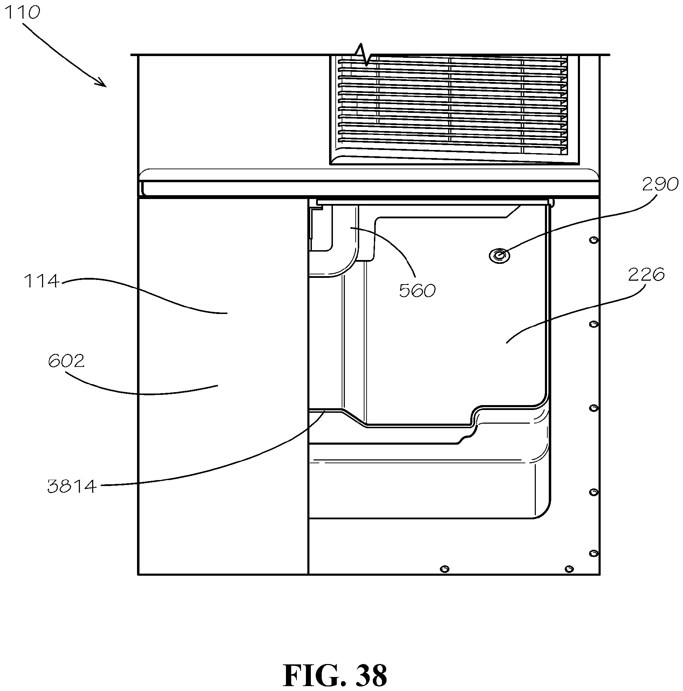

The cube guide 550 can be configured to guide the ice cubes 490 coming out of the evaporator case 206 downwards under the force of gravity and out of the cube opening 552. The ice cubes 490 coming through the cube opening 552 can be ejected underneath the compressor base 226 (shown in Figure 2A) and through the bottom opening 3814 (shown in Figure 38). The ice maker 110 (shown in Figure 1) can be positioned over the storage bin 190 (shown in Figure 1) so that an opening (not shown) of the storage bin 190 can be aligned underneath the compressor base 226 and with the bottom opening 3814. The ice cubes 490 falling from the cube opening 552 can fall out underneath the compressor base 226, through the bottom opening 3814, and into the opening of the storage bin 190 to fill the storage bin 190.

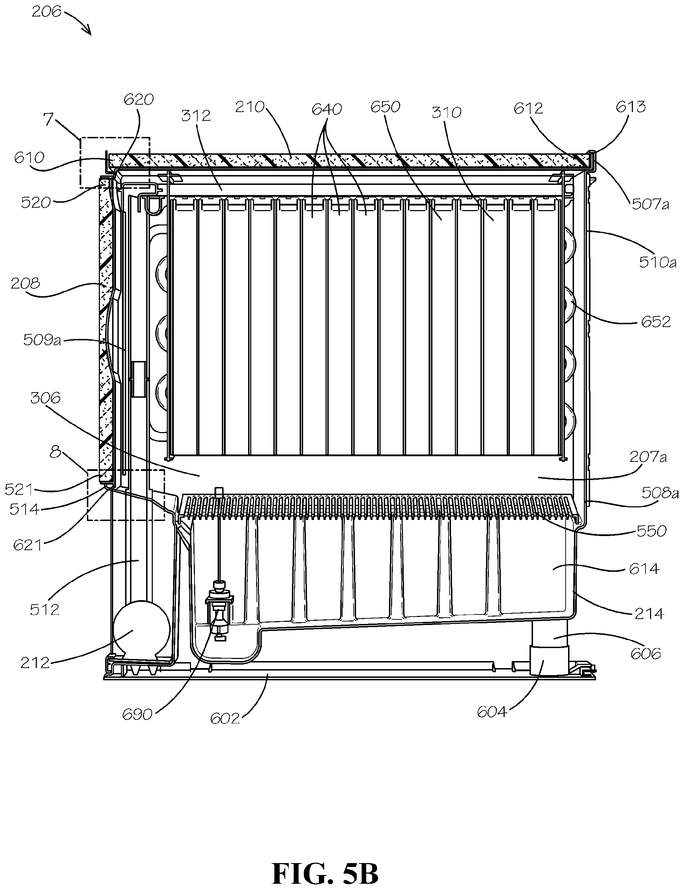

A water reservoir 614 (shown in Figure 5B) can be defined below the cube guide 550 and between the outer tank side 530a and the inner tank side 530b. A suction hose 560 can be in fluid communication with the water reservoir 614 through the inner tank side 530b and in fluid communication with the water pump 212 to provide water to the water pump 212. The water pump 212 can then discharge the water upwards through the top tank end 514 and into the evaporator compartment 306 via an insulated tubing 512.

The evaporator wall 207b can define a front wall end 509b and a rear wall end 510b disposed opposite from the front wall end 509b. The front insulation 208 can be disposed at the front wall end 509b between the evaporator walls 207a,b. The front insulation 208 can define a top insulation end 520 and a bottom insulation end 521 disposed opposite from the top insulation end 520. The top insulation end 520 can define a lip 620 (shown in Figure 5B), which can engage the top insulation 210, and the bottom insulation end 521 can define a lip 621 (shown in Figure 5B), which can engage the top tank end 514 to secure the front insulation 208 to the evaporator case 206. To remove the front insulation 208, the top insulation 210 can be removed, and then the top insulation end 520 can be rotated away from the front wall end 509b while the bottom insulation end 521 pivots about the top tank end 514 until the front insulation 208 is free. The front insulation 208 can define a pull tab 522 configured to provide a gripping surface to rotate the top insulation end 520 away from the front wall end 509b. By forward movement of the pull tab 522 with the top insulation 210 fully installed, the lip 620 can catch on, push, and thereby facilitate removal of the top insulation 210. Engagement between the front insulation 208, the top tank end 514, and the top insulation 210 is further shown with respect to Figure 5B, including the lips 620,621.

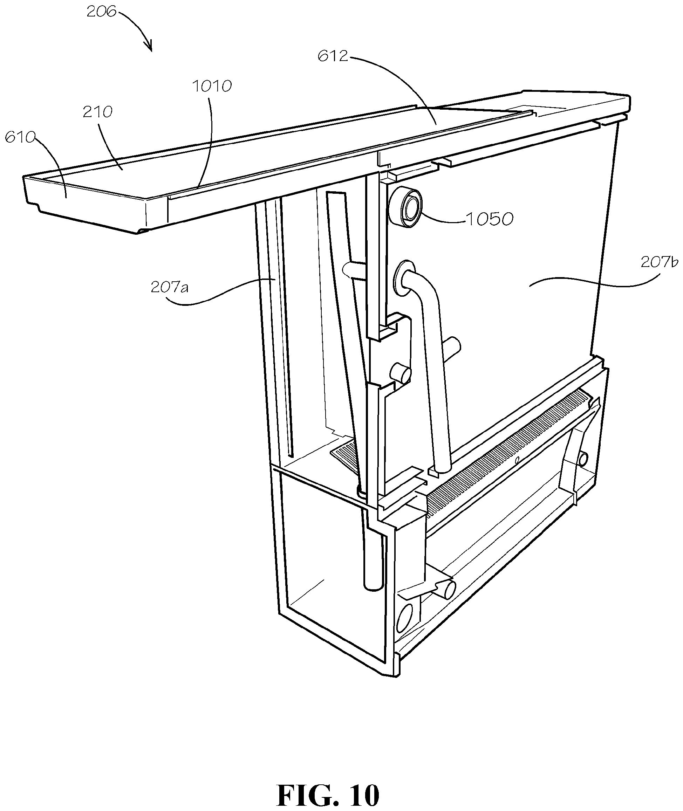

Figure 5B is a sectional side view of the evaporator case 206 of Figure 2B taken along line 5B-5B shown in Figure 5A. The cross-sectional plane can substantially bisect the insulated tubing 512. The top insulation 210 can define a front insulation end 610 and a rear insulation end 612 disposed opposite from the front insulation end 610. The rear insulation end 612 can be vertically captured by a lip 613 defined by a top wall end 507a of the evaporator wall 207a and the top wall end 507b of the evaporator wall 207b (shown in Figure 5A). The evaporator wall 207a can further define a front wall end 509a, a rear wall end 510a, and a bottom wall end 508a, which can correspond to the front wall end 509b, the rear wall end 510b, and the bottom wall end 508b of the evaporator wall 207b, each shown in Figure 5A. The front insulation end 610 can be secured to the evaporator walls 207a,b as shown and described below with respect to Figures 10-12.

The insulated tubing 512 can carry water from the water pump 212 to the spray tube 312. The spray tube 312 can extend from the front wall end 509a to the rear wall end 510a, and the spray tube 312 can be configured to spray water downwards from various points along its length into a series of channels 640 defined by an evaporator plate 650 of the evaporator 310. The evaporator 310 can further comprise tubing 652, which can weave forward and rearward in a serpentine path between the evaporator plate 650 and an adjacent evaporator plate 650 to facilitate heat exchange between the tubing 652 and the adjacent and opposing evaporator plates 650. As liquid refrigerant running through the evaporator 310 begins to evaporate to a gaseous state, the refrigerant absorbs heat from the water sprayed by the spray tube 312 against the outside of the evaporator plates 650, which can cause the ice cubes 490 (shown in Figure 4) to form in the channels 640. Once the ice cubes 490 are sufficiently large, which can be determined by the passage of a predetermined ice production interval during an ice formation cycle, the ice cubes 490 can be removed from the evaporator by initiation of a harvest cycle. During heating of the evaporator 310 during the harvest cycle, the ice cubes 490 can fall downwards to be redirected by the cube guide 550. The cube guide 550 can define openings so that the ice cubes 490 are redirected by the cube guide 550 toward the cube opening 552 while unfrozen liquid water dripping down the evaporator plates 650 can pass through the cube guide 550 to return to the water reservoir 614.

The float switch 690 can be disposed within the water reservoir 614 of the tank 214. The float switch 690 can measure the water level of water within the water reservoir 614. Once the water level falls below a set minimum, the float switch 690 can send a signal to the controller 232 (shown in Figure 2A) to supply more water to the tank 214.

As shown, the evaporator case 206 can further comprise a tank base 602. The tank base 602 can define a split collar 604 which can be configured to receive and frictionally engage a support column 606 defined by the tank 214. Frictional engagement between the support column 606 and the split collar 604 can facilitate assembly of the evaporator case 206 by providing a tool-less, push-together connection.

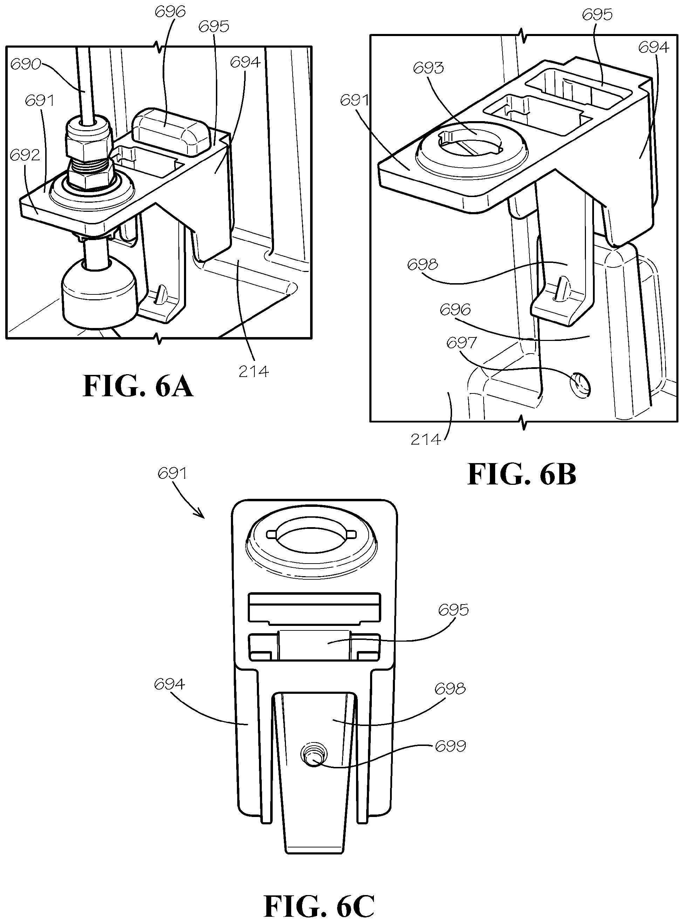

Figure 6A is a perspective view of the float switch 690 within the tank 214. The float switch 690 can be mounted to a float switch mount 691. The float switch mount 691 can comprise a support arm 692 and a mounting bracket 694. The support arm 692 can define an opening 693 (shown in Figure 6B), and the float switch 690 can be secured through the opening 693, such as with a nut or other fastener. The mounting bracket 694 can define a mounting channel 695. The mounting channel 695 can receive a projection 696 defined by the tank 214. The tank 214 can be formed by an injection molding process, and one of the benefits of the injection molding process is the ability to integrally, i.e., monolithically, form detailed features, such as the projection 696, the boss 1050 (shown in Figure 10), and other features of the evaporator case 206 as described herein, rather than attaching them as separate components. "Monolithic" means at least to be cast, molded, or otherwise formed as a single piece. More specifically, each monolithic component can be formed from a single material in a single operation and without any welds or mechanical connections such as threading, flanges, fasteners, interference fits, adhesives, brazing, soldering, or other mechanical methods of connection, at least to join the features described as being monolithic or formed monolithically. The projection 696 can taper slightly upwards, and the mounting channel 695 can define a complimentary shape to secure the float switch mount 691 firmly on the projection 696.

Figure 6B is a perspective view of the float switch mount 691 within the tank 214. As shown, the mounting bracket 694 can be positioned over the projection 696, and the mounting channel 695 can be aligned with the projection 696 so that the mounting bracket 694 can be installed on the projection 696 by lowering the mounting bracket 694 onto the projection 696. As shown, the projection can define a pocket 697, and the mounting bracket 694 can define a latching arm 698 configured to engage the pocket 697, thereby securing the mounting bracket 694 on the projection 696.

Figure 6C is a rear view of the float switch mount 691 facing the mounting bracket 694. As shown, the latching arm 698 can at least partially define the mounting channel 695. The latching arm 698 can also define a locator tab 699, which can extend into the mounting channel 695. The locator tab 699 can be configured to engage the pocket 697 (shown in Figure 6B) to secure and fix a position of the mounting bracket 694 on top of the projection 696 (shown in Figure 6B) in the horizontal and vertical directions.

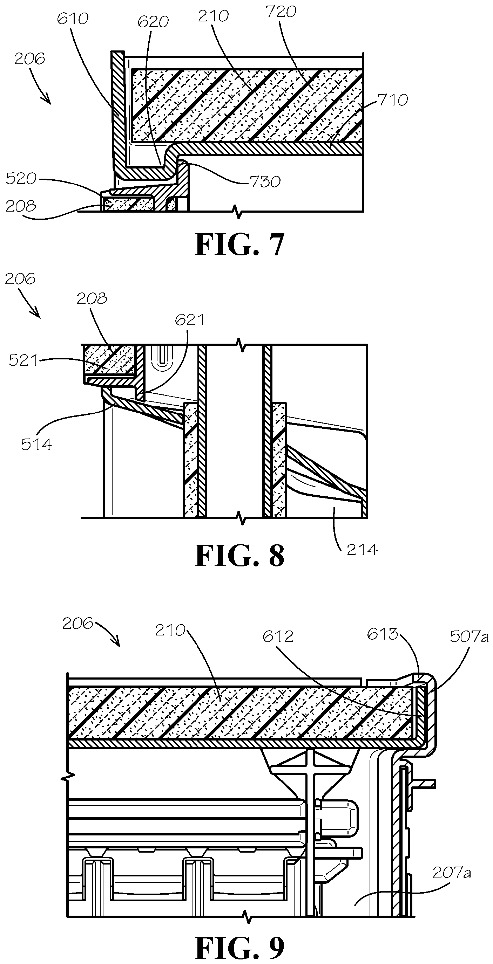

Figure 7 is a detailed sectional view of the lip 620 of the front insulation 208 engaging the top insulation 210. While the lip 620 of the front insulation 208 as shown is interfering with the top insulation 210, in its final assembly location the lip 620 can be positioned between a step 730 of the top insulation 210. The top insulation 210 can comprise a top insulation liner 710 and a top insulation sheet 720. Figure 8 is a detailed sectional view of the lip 621 of the front insulation 208 engaging the top tank end 514 of the tank 214. Figure 9 is a detailed sectional view of the lip 613 of the evaporator wall 207a engaging the rear insulation end 612 of the top insulation 210.

Figures 10-12 demonstrate the top insulation 210 being slid into position between the evaporator walls 207a,b. In Figure 10, the rear insulation end 612 of the top insulation 210 can be positioned between the evaporator walls 207a,b, and the front insulation end 610 can extend laterally outward from between the evaporator walls 207a,b. The top insulation 210 can define a pair of rails, as demonstrated by the rail 1010 on a one side of the top insulation 210, which can extend lengthwise along each side of the top insulation 210.

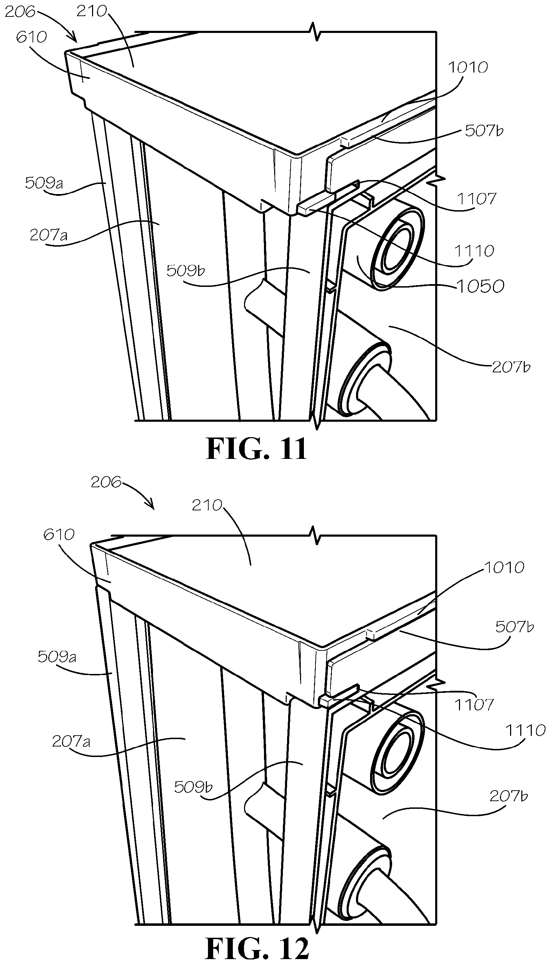

Figure 11 shows the top insulation 210 seated nearly into position between the evaporator walls 207a,b, but not yet secured to the evaporator walls 207a,b. As demonstrated by the rail 1010, the pair of rails can ride along the top wall ends 507a,b (507a shown in Figure 5B) of the evaporator walls 207a,b. As demonstrated by the evaporator wall 207b, the evaporator walls 207a,b can define notches 1107 (the notch defined by the evaporator wall 207a not shown) disposed near a corner of the top wall ends 507a,b (507a shown in Figure 5B) and the front wall ends 509a,b. The notches 1107 can extend laterally inwards from and through a thickness of the front walls ends 509a,b. The top insulation 210 can define tabs 1110 on opposing sides of the front insulation end 610. In the present view, the tabs 1110 can be aligned with but disengaged from the notches 1107.

Figure 12 is a detailed front perspective view of the evaporator case 206 showing the top insulation 210 in an installed and secured configuration. As shown, the top insulation 210 can be fully positioned between the evaporator walls 207a,b, and the tabs 1110 can be inserted into the notches 1107, thereby securing the front insulation end 610 to the evaporator walls 207a,b.

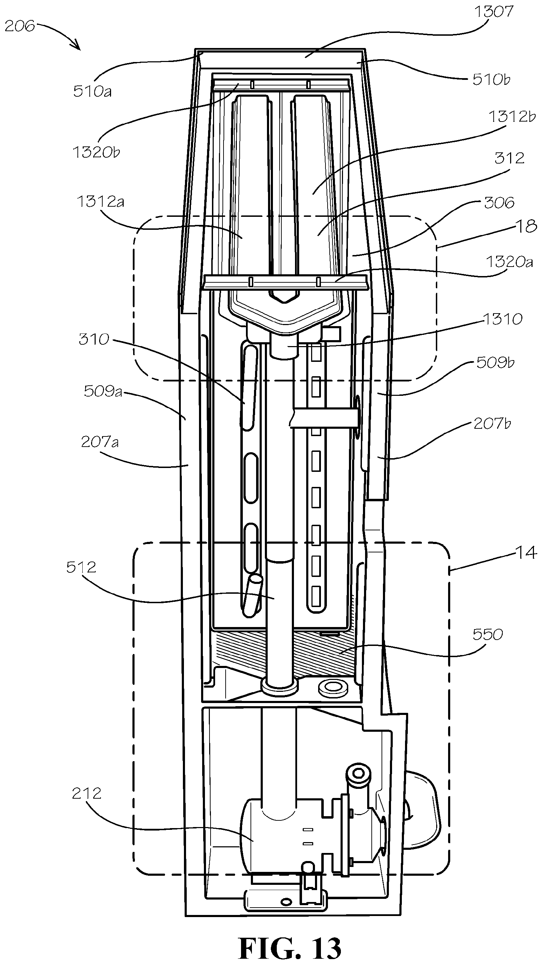

Figure 13 is a front top perspective view of the evaporator case 206 of Figure 2A with the front insulation 208 and the top insulation 210 removed. Each of the evaporator walls 207a,b can be substantially L-shaped, and the rear wall ends 510a,b can be connected together to form a back panel 1307 of the evaporator case 206. The evaporator case 206 can comprise a pair of evaporator brackets 1320a,b. The evaporator bracket 1320a can be disposed proximate to the front wall ends 509a,b, and the evaporator bracket 1320b can be disposed proximate to the rear wall ends 510a,b. The evaporator brackets 1320a,b can slide vertically downward between the evaporator walls 207a,b to secure the evaporator brackets 1320a,b within the evaporator compartment 306.

The evaporator brackets 1320a,b can support the spray tube 312 and the evaporator 310. The spray tube 312 can define a manifold end 1310 disposed between the evaporator bracket 1320a and the front wall ends 509a,b. The spray tube 312 can also define two tube portions 1312a,b which can split from the manifold end 1310 and extend between the evaporator brackets 1320a,b. The manifold end 1310 can be connected to the insulated tubing 512, and water pumped upwards from the water pump 212 can be redirected through the manifold end 1310 to the tube portions 1312a,b. The tube portions 1312a,b can spray the water down through the evaporator 310 when the ice maker 110 is producing ice. The supply tube 1930 (shown in Figure 2C) can, in contrast, spray the water through the evaporator 310 (including through portions of the evaporator 310 not accessed by the water from the spray tube 312) when the ice maker 110 is cleaning itself during a cleaning cycle or a sanitizing cycle described below.

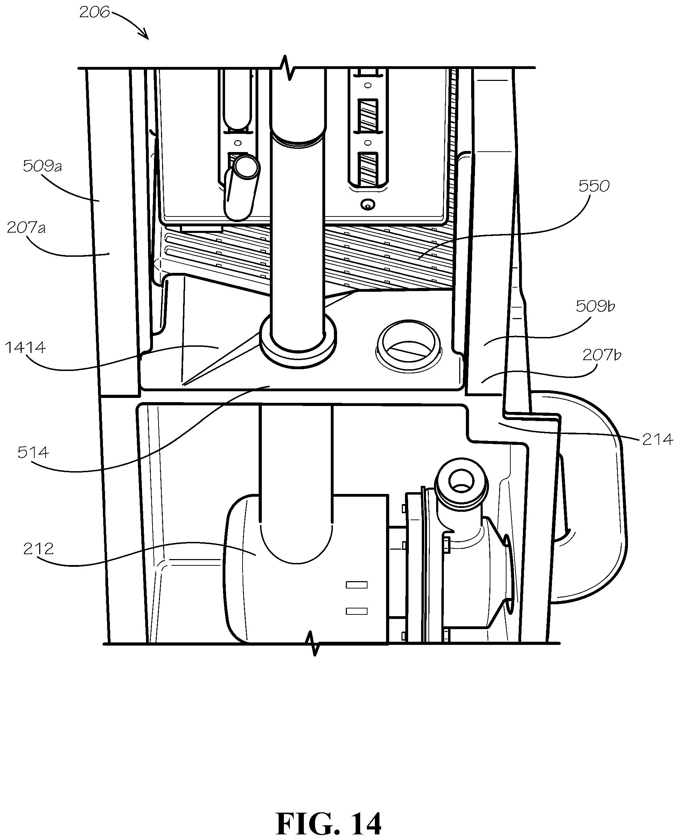

Figure 14 is a detailed front top perspective view of the tank 214 of the evaporator case 206. The top tank end 514 can define a sloped spout 1414. The spout 1414 can slope downwards from a front end of the tank 214 disposed proximate to the front wall ends 509a,b of the evaporator walls 207a,b toward the cube guide 550. During cleaning of the ice maker 110 (shown in Figure 1), the water reservoir 614 (shown in Figure 5B) within the tank 214 can be drained and refilled with a cleaning solution, as described below in greater detail. The spout 1414 can aid in filling the water reservoir with the cleaning solution. The cleaning solution can be poured onto the spout 1414 and directed downwards along the spout 1414 and through the cube guide 550 to fill the water reservoir 614. The cleaning solution can then be circulated through the water circuit 450 (shown in Figure 3) by the water pump 212.

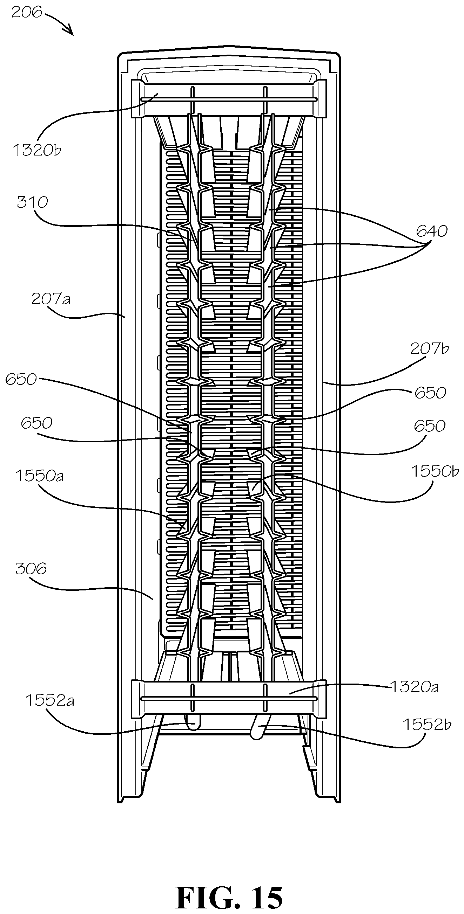

Figure 15 is a top perspective view of the evaporator case 206 with the spray tube 312 removed. As shown, the evaporator 310 can comprise four of the evaporator plates 650, which can be paired into two evaporator plate assemblies 1550a,b. The evaporator plate assemblies 1550a,b can extend between the evaporator brackets 1320a,b to secure the evaporator 310 within the evaporator compartment 306. Two tubing circuits 1552a,b can extend between the adjacent evaporator plates 650 of the respective evaporator plate assemblies 1550a,b. The tubing circuits 1552a,b can each be configured in a serpentine pattern extending backwards and frontwards between the evaporator brackets 1320a,b. The tubing circuits 1552a,b and evaporator plates 650 can each comprise a thermally conductive material, such as copper, stainless steel, aluminum, brass, or any other suitable material. For example and without limitation, the tubing circuits 1552a,b can comprise copper tubing, and the evaporator plates 650 can comprise stainless steel. Each evaporator plate assembly 1550a,b can operate as a heat exchanger. More specifically, heat from the evaporator plates 650 can be absorbed by evaporating refrigerant circulated through the tubing circuits 1552a,b to cool the evaporator 310 below the freezing point of water.

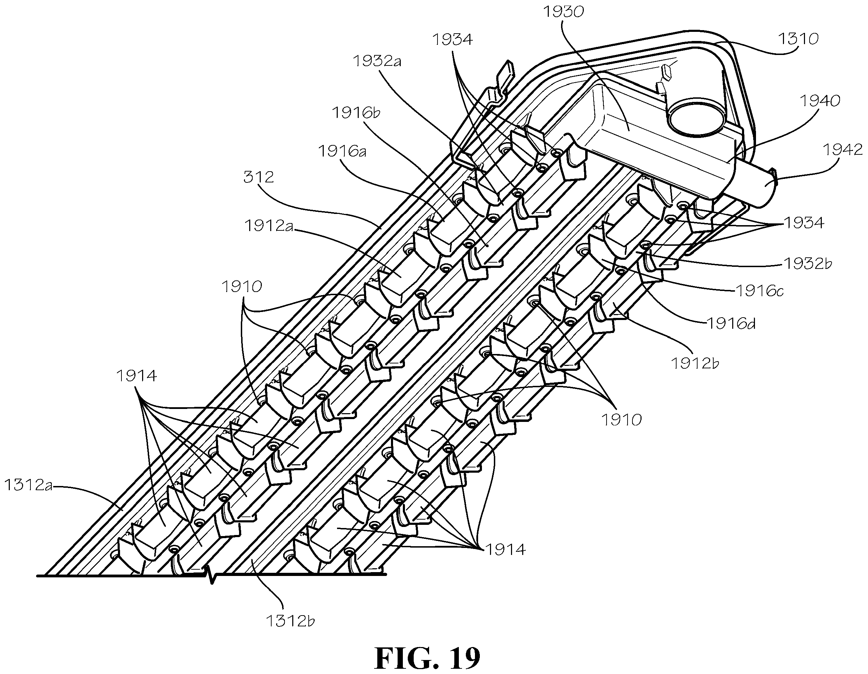

Each of the evaporator plates 650 can define a plurality of the channels 640. In operation, the two tube portions 1312a,b (shown in Figure 13) of the spray tube 312 (shown in Figure 13) can respectively align with the two evaporator plate assemblies 1550a,b of evaporator plates 650. The tube portions 1312a,b can each define a plurality of spray nozzles 1910 (shown in Figure 19) which can respectively be aligned with the plurality of channels 640 defined by the evaporator plates 650 on each side of the respective evaporator plate assembly 1550a,b. The spray nozzles 1910 can spray water down the channels 640, where the ice cubes 490 can be individually formed.

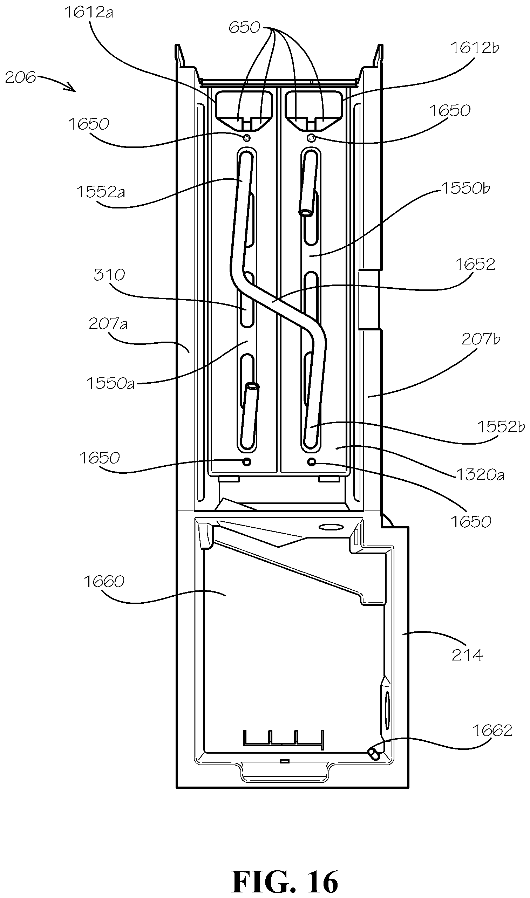

Figure 16 is a front perspective view of the evaporator case 206 with the spray tube 312, the water pump 212, and the insulated tubing 512 removed. As shown, each of the evaporator plate assemblies 1550a,b of the evaporator plates 650 can be secured to the evaporator brackets 1320a,b (1320b shown in Figure 15) by a plurality of fasteners 1650, as represented by the evaporator bracket 1320a. Additionally, the tubing circuits 1552a,b can be connected in fluid communication by a cross-over tube 1652 to form a single loop of the refrigerant circuit 400 (shown in Figure 3). Additionally, as represented by the evaporator bracket 1320a, each one of the evaporator brackets 1320a,b can define a pair of tube openings 1612a,b. Each of the tube openings 1612a,b can be configured to respectively receive and support a different one of the tube portions 1312a,b (shown in Figure 13) of the spray tube 312 (shown in Figure 13).

With the water pump 212 removed from a pumping compartment 1660 of the tank 214, a drain port 1662 of the pumping compartment 1660 can be exposed. The drain port 1662 can lead to the tank base 602 (shown in Figure 6) to drain any water that might otherwise collect in the pumping compartment 1660 from the pumping compartment 1660 to outside the ice maker 110.

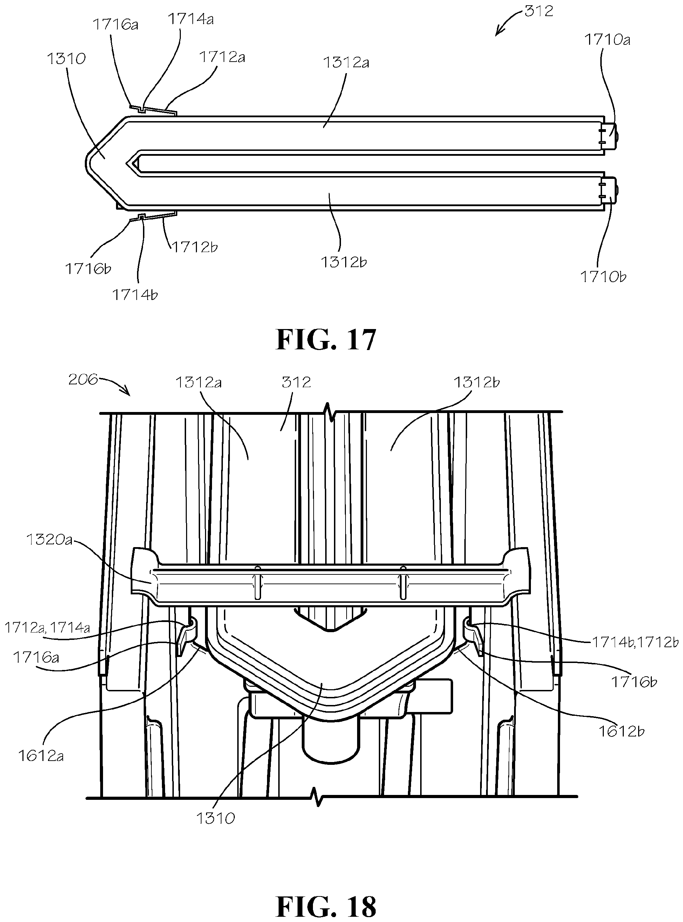

Figure 17 is a top view of the spray tube 312 of Figure 3. The spray tube 312 can comprise a pair of lever arms 1712a,b, each of which can attach to a different one of the tube portions 1312a,b, opposite from one another. The lever arms 1712a,b can be resilient and flexible, and the lever arms 1712a,b can be biased to extend outwards from the respective tube portions 1312a,b and toward the manifold end 1310. Each lever arm 1712a,b can define an engagement notch 1714a,b and an end 1716a,b, respectively. The spray tube 312 can also comprise a pair of caps 1710a,b which can enclose the tube portions 1312a,b opposite from the manifold end 1310.

Figure 18 is a detailed front perspective view of the evaporator case 206 focusing on the manifold end 1310 of the spray tube 312 of Figure 3. As previously described, each of the tube portions 1312a,b can respectively extend through a different one of the tube openings 1612a,b, and the evaporator bracket 1310a can support the manifold end 1310 of the spray tube 312. The lever arms 1712a,b can also extend through the tube openings 1612a,b along with the respective attached tube portion 1312a,b. The engagement notches 1714a,b can each engage an edge of a different one of the tube openings 1612a,b, thereby laterally securing spray tube 312 to the evaporator bracket 1310a and preventing withdrawal of the tube portions 1312a,b from the tube openings 1612a,b. The lever arms 1712a,b can be disengaged from the tube openings 1612a,b by pressing the ends 1716a,b inwards toward the manifold end 1310. Once the lever arms 1712a,b are disengaged from the tube openings 1612a,b, the spray tube 312 can be pulled laterally outwards from the evaporator bracket 1310a, such as to facilitate cleaning or maintenance of the spray tube 312.

Figure 19 is a detailed bottom perspective view of the spray tube 312 of Figure 3. focusing on the manifold end 1310. As shown, each of the tube portions 1312a,b can define a plurality of spray nozzles 1910. The spray nozzles 1910 can be configured to align with the channels 640 (shown in Figure 15) defined by the evaporator plates 650 (shown in Figure 15). A pair of spray guides 1912a,b can be positioned below the spray tube 312. The spray guides 1912a,b can respectively extend along a bottom surface of the tube portions 1312a,b. Each of the spray guides 1912a,b can define a plurality of channel guides 1914, which can align with a different one of the spray nozzles 1910. The channel guides 1914 can be configured to each align with a different one of the channels 640 to guide liquid water down the respective channel 640.

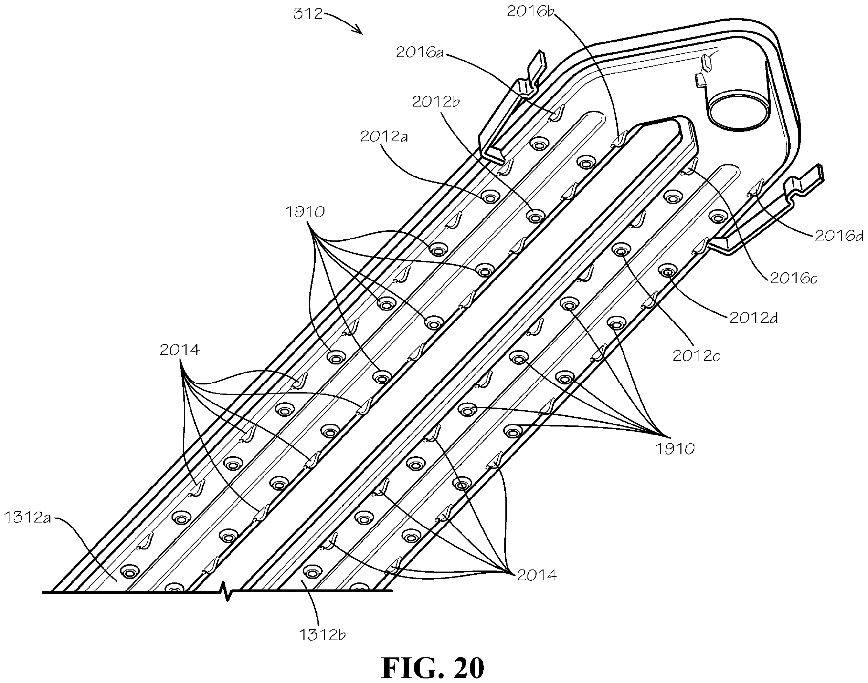

Each tube portion 1312a,b can define two rows of spray nozzles 1910, as better shown below with respect to Figure 20, and each spray guide 1912a,b can define two rows 1916a-d of channel guides 1914, respectively. The supply tube 1930 can additionally be positioned below the spray tube 312. The supply tube 1930 can define a supply manifold end 1940 with a connection 1942. The supply tube 1930 can also comprise a pair of supply tube portions 1932a,b. Each of the supply tube portions 1932a,b can extend along a one of the tube portions 1312a,b between adjacent rows 1916a-d of the channel guides 1914. For example, the supply tube portion 1932a can extend between the adjacent rows 1916a,b of the channel guides 1914 along the tube portion 1312a. The supply tube portions 1932a,b can each define a plurality of supply nozzles 1934, which during cleaning and sanitizing of the ice maker can spray cleaning fluid, sanitizing fluid, and water between the evaporator plates 650 (shown in Figure 15) of the evaporator plate assemblies 1550a,b (shown in Figure 15) to respectively clean, sanitize, and rinse areas of the evaporator 310 that would otherwise be difficult to clean.

Figure 20 is a detailed bottom perspective view of the spray tube 312 of Figure 19 shown apart from the supply tube 1930 and the spray guides 1912a,b. As previously described, the spray nozzles 1910 can be arranged into two rows 2012a-d along each respective tube portion 1312a,b. For example, two rows 2012a,b of spray nozzles 1910 can extend down the tube portion 1312a. Additionally, two rows 2016a-d of guide tabs 2014 can extend along each tube portion 1312a,b, and the guide tabs 2014 can be spaced between the spray nozzles 1910. The guide tabs 2014 can aid in aligning the spray guides 1912a,b (shown in Figure 19) with the spray nozzles 1910.

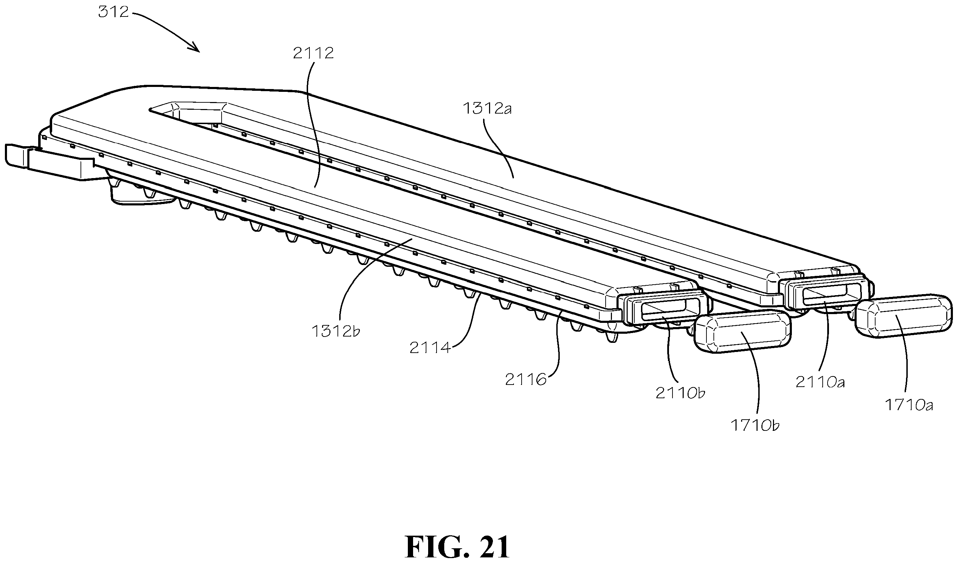

Figure 21 is a side perspective view of the spray tube 312 of Figure 19 shown apart from the supply tube 1930 and the spray guides 1912a,b. As has been typically done in the past, the spray tube 312 can be formed integrally or monolithically from a single piece using a method such as blowmolding. In contrast, the spray tube 312 can comprise a top panel 2112 and a bottom panel 2114. The top panel 2112 and the bottom panel 2114 can be separately formed pieces, such as through injection molding, for example and without limitation. The top panel 2112 and the bottom panel 2114 can be attached together by a seam 2116, such as through a technique like vibration welding, for example and without limitation. Vibration welding is a fast and chemical-less technique that can melt the parts together. The top panel 2112 and the bottom panel 2114 can be rubbed together under pressure with a vibration forming tool to form friction, which can melt the base material of the panels 2112,2114 together. The weld can then cool.

In the present aspect, the caps 1710a,b can also be removed from the respective tube portions 1312a,b to reveal end openings 2110a,b. In contrast to a blow-molded spray tube with typically a small, rough-edged hole defining each of the end openings 2110a,b, the end openings 2110a,b of the spray tube 312 formed from the panels 2112,2114 can be wide, open slots configured to allow easy access for cleaning, such as with a brush or high-pressure spray stream. In the present aspects, the caps 1710a,b can be configured to securely snap over the end openings 2110a,b without tools to facilitate assembly and maintenance.

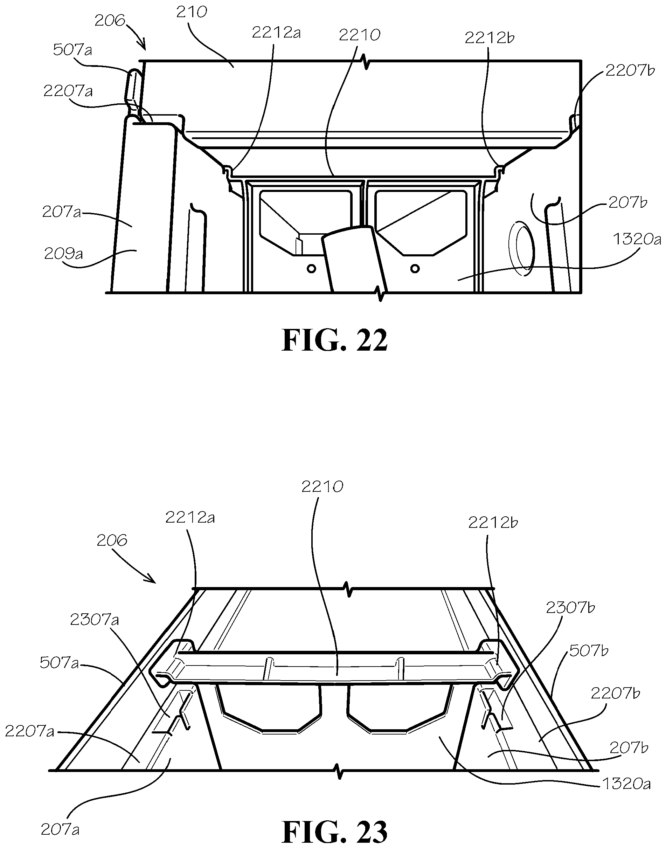

Figure 22 is a detailed front view of top insulation 210, the evaporator bracket 1310a, and the evaporator walls 207a,b of the evaporator case 206. As shown, the evaporator bracket 1310a can define a top flange 2210. The top flange 2210 can define a pair of wings 2212a,b at opposite sides of the top flange 2210. The evaporator walls 207a,b can each define an inner ledge 2207a,b, and the top insulation 210 can rest upon the inner ledges 2207a,b. As shown by evaporator wall 207a, the inner ledge 2207a can be defined below the top wall end 507a. The evaporator brackets 1310a, (evaporator bracket 1310b shown in Figure 13) can be configured to be lifted vertically upward to remove the evaporator brackets 1310a,b from between the evaporator walls 207a,b. With the top insulation 210 in place, the evaporator bracket 1310a,b can be blocked such that the evaporator bracket 13 10a,b cannot be lifted vertically.

Figure 23 is a detailed front perspective view of the evaporator bracket 1310a and the evaporator walls 207a,b of the evaporator case 206 with the evaporator bracket 1310a partially removed from the evaporator walls 207a,b. With the evaporator bracket 1310a vertically lifted upwards, the wings 2212a,b can disengage from a pair of watertight pockets 2307a,b respectively defined extending into the inner ledges 2207a,b of the evaporator walls 207a,b. In contrast to when the evaporator walls 207a,b are formed using a vacuum-forming process, as has been typically done in the past, the pockets 2307a,b can be formed without exposing any blown foam or other insulation present behind the evaporator walls 207a,b.

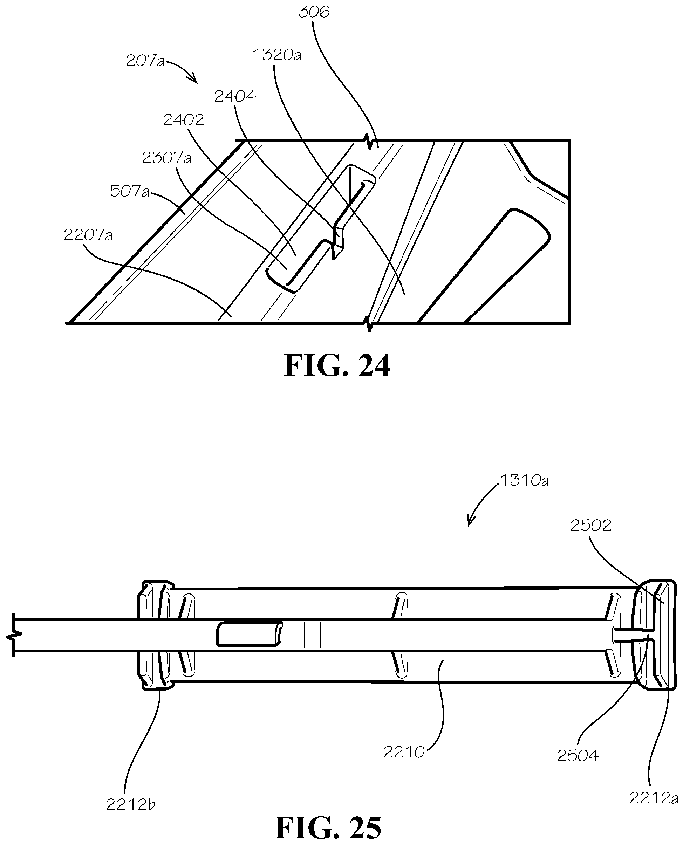

Figure 24 is a detailed perspective view of the pocket 2307a of the evaporator wall 207a. As shown, the pocket 2307a can define a groove 2402 extending lengthwise along the inner ledge 2207a and a perpendicular notch 2404 extending inwards from the groove 2402 and through to the evaporator compartment 306. In the present aspect, the evaporator walls 207a,b (207b shown in Figure 23) can be formed by injection molding, and the pocket 2307a can be integrally formed within the evaporator wall 207a. In the present aspect, as suggested above, the pocket 2307a does not extend through the evaporator wall 207a, thereby providing watertight protection of the foam insulation from the pocket 2307a.

Figure 25 is an upward-looking bottom perspective view of the evaporator bracket 1310a of Figure 13. As shown, the wing 2212a can define a lengthwise tab 2502 which can be configured to engage the groove 2402 (shown in Figure 24) and a perpendicular ridge 2504 configured to engage the perpendicular notch 2404 (shown in Figure 24).

As noted above, the evaporator walls 207a,b have traditionally been formed using a vacuum-forming process from a polymer material such as acrylonitrile butadiene styrene (ABS). A vacuum-formed part, however, can and inevitably will vary in thickness to varying degrees across the part and because of variable shrinkage in variable manufacturing conditions can vary in size from part to part to a greater degree than parts formed using an injection-molding process. After forming of the individual vacuum-formed parts, the parts are typically joined using a solvent-welding process. During solvent welding, a solvent such as acetone or a monomer mixture comprising a solvent such as acetone and a mixture of ground (i.e., reduced to small fragments) raw material forming the parts (e.g., ground ABS), for example and without limitation, can be used to soften the material of the panels 2112,2114, and the panels 2112,2114 can be pressed together until the material re-hardens and cures. While the monomer used in solvent welding can solidify within minutes, a cure time of 24 hours is typically required, and the quality of the joints joined by solvent welding can vary greatly depending on the skill of an operator assembling the parts, such as the evaporator walls 207a,b and the tank 214. Moreover, solvent welding often involves chemicals, which can produce an unpleasant vapor during use.

In contrast, as also noted above, the evaporator walls 207a,b as well as the tank 214 of the evaporator case 206 can be individually formed using a molding process such as injection molding from a material such as ABS or any other desirable and moldable material. As will be described, each of the parts of the evaporator case 206 can then be joined together very tightly without any fasteners or even any solvent welding processes to form an evaporator case 206 that is water-tight and resistant to leakage of blown foam (i.e., foam-tight) through the joints during the manufacturing process and in particular during the process of forming the evaporator case 206. Water-blown insulation in particular can have a low viscosity and after being sprayed into an insulated assembly such as the evaporator case 206 can remain in a water-like state for as long as 10 seconds or more, making water-tight and foam-tight joints even more beneficial-and not only against water intrusion during operation of the ice maker 110 but water leakage from seams of insulated assemblies such as the evaporator case 206 during the foaming process.

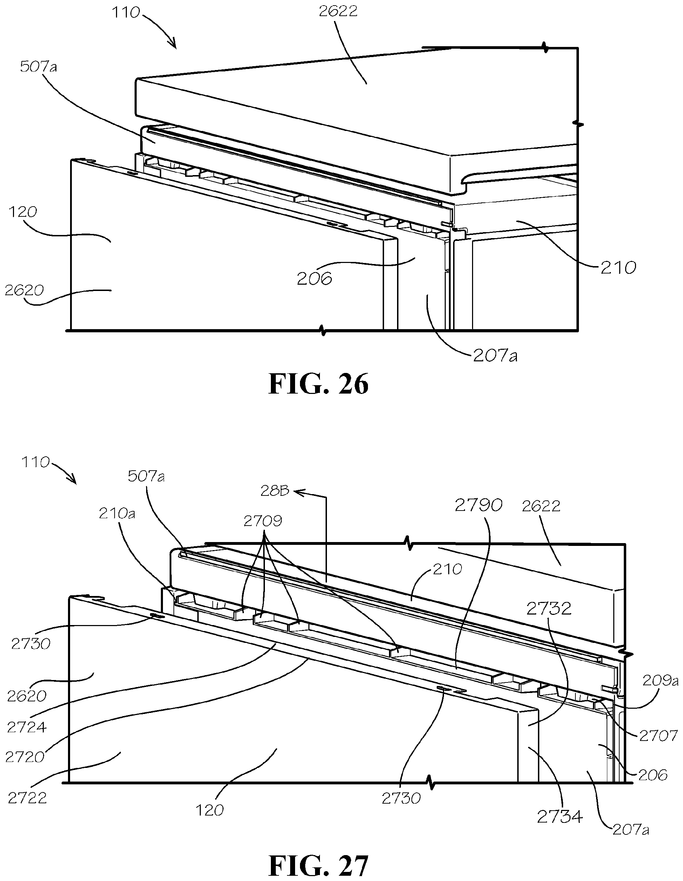

Figure 26 is a detailed front corner perspective view of the ice maker 110 of Figure 1 with the front panel assembly 122 (shown in Figure 1) of the outer casing 120 removed and before assembly of the evaporator case 206. As shown, a left side panel 2620 of the outer casing 120 is offset outward from the evaporator wall 207a of the evaporator case 206, and a top panel assembly 2622 of the outer casing 120 is offset above the top insulation 210. The left side panel and any other panel forming a portion of an exterior of the evaporator case 206 or the base case 205 can be an exterior panel.

Figure 27 is a detailed perspective view of the portion of the ice maker 110 shown in Figure 26 focusing on a top panel end 2720 of the left side panel 2620. The left side panel 2620 can define a vertical portion 2722, a lip 2724-which can be a top lip-disposed at the top panel end 2720, and a lip 2734-which can be a side lip-disposed at a front panel end 2732. The lip 2724 can extend inwards toward the evaporator case 206. The evaporator wall 207a can define a groove 2707 extending from the front wall end 209a to the rear wall end 210a. The groove 2707 can be defined below the top wall end 507a. Within the groove 2707, the evaporator wall 207a can define a plurality of inclined projections 2709 extending into the groove 2707 and can be sloped projections. The inclined projections 2709 can slope upwards and inwards into the groove 2707. As shown, the inclined projections 2709 and a bottom groove wall 2790, which can extend between the inclined projections 2709, can extend toward the left side panel 2620 by the same distance to contact and form a seal against the left side panel 2620 during foaming of the assembly.

In some aspects, as shown and described, the groove 2707 can be oriented horizontally and the lip 2724 can be oriented horizontally. In other aspects, the groove 2707 can be oriented vertically and the lip 2724 can be oriented vertically such as, for example and without limitation, proximate to the front wall ends 509a,b (shown in Figure 11) of the evaporator walls 207a,b (207b shown in Figure 11). The groove 2707 can thereby be a horizontal groove or a vertical groove of any portion of the evaporator case 206 and the lip 2724 can be a horizontal lip or a vertical lip of any panel. Similarly, other portions of the evaporator case can define grooves 2707, which can be oriented horizontally, vertically, or at any other desired orientation between the horizontal and the vertical orientations.

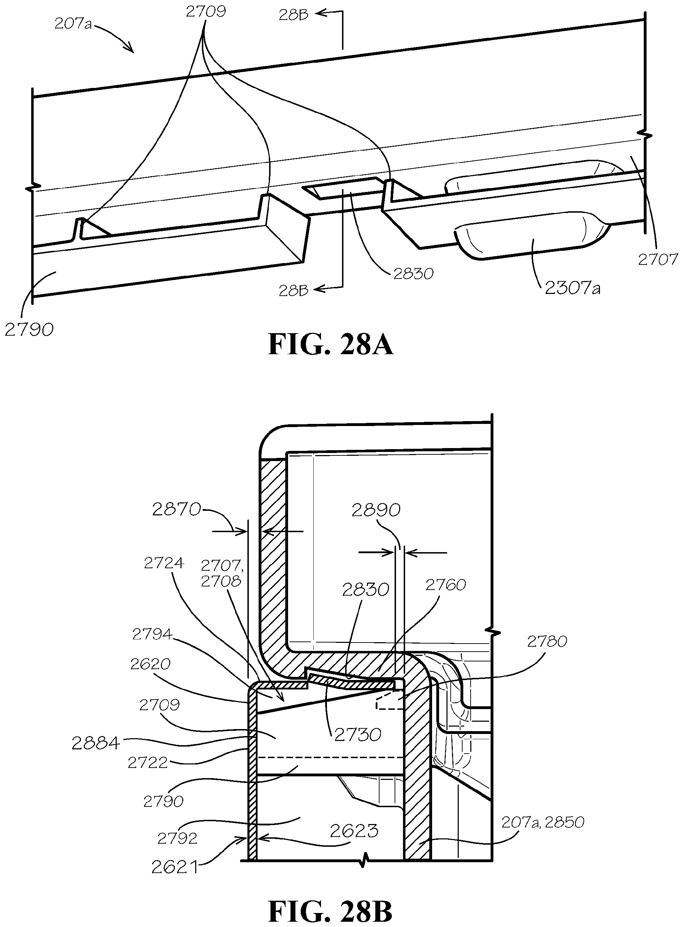

The groove 2707 can be configured to receive the lip 2724 to attach the left side panel 2620 to the evaporator wall 207a. The lip 2724 can be inserted into the groove 2707. The lip 2724 can slide over the inclined projections 2709 into a fully seated position and thereby form a slide joint. Additionally, the left side panel 2620 can define a pair of tabs 2730. In the present aspect, the tabs 2730 can be cut out of the lip 2724 and plastically deflected upwards and away from the lip 2724 at an incline. Each of the tabs 2730 can engage a watertight pocket 2830 defined within the groove 2707, as shown below in Figure 28. Each of the tabs 2730 can be a lance tab, which can elastically deform during assembly, at least together with the lip 2724 if not also toward the surrounding portion of the lip 2724 to allow insertion of the lip 2724. The tab 2730, with or without the surrounding portion of the lip 2724, can then elastically deform back to its original position to engage in or with the pocket 2830.

Figure 28A is a perspective view of the pocket 2830 of the evaporator wall 207a of Figure 2. The pocket 2830 can be defined by an upper surface of the groove 2707, opposite from the inclined projections 2709. The inclined projections 2709 can press the lip 2724 (shown in Figure 27) and the tabs 2730 (shown in Figure 27) up into engagement with the pockets 2830 to secure the top panel end 2720 of the left side panel 2620 to the evaporator wall 207a. This attachment mechanism can provide a simple, snap-together assembly that does not require any tools.

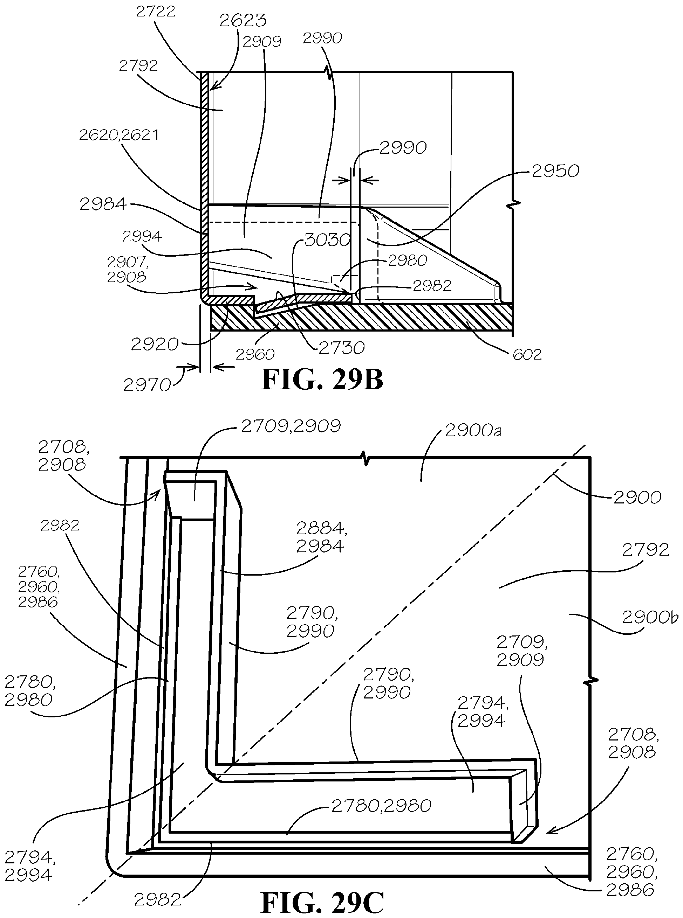

Figure 28B shows a detailed sectional view of the top panel end 2720 of the left side panel 2620 assembled to the evaporator wall 207a of the evaporator case 206 in the aforementioned slide joint. The groove 2707 can be defined between a top groove wall 2760 and the bottom groove wall 2790. As shown, the bottom groove wall 2790 can extend outwards from the evaporator wall 207a to contact the vertical portion 2722 of the left side panel 2620, and the bottom groove wall 2790 can serve as a standoff-defining even part of a standing rib 2884, similarly as a standing rib 2984 (shown in Figure 29B) described below- between the evaporator wall 207a and the left side panel 2620. An insulation cavity 2792 can be defined below the bottom groove wall 2790 and between the vertical portion 2722 of the left side panel 2620 and the evaporator wall 207a. An overflow insulation cavity 2794 can be defined above the bottom groove wall 2790, below the lip 2724, and between the vertical portion 2722 of the left side panel 2620 and the evaporator wall 207a.

The tab 2730 can be formed by shearing and bending a portion of the lip 2724 only partially into the lip 2724 such that a water-tight and foam-tight closed lance is formed. As shown, the shearing and bending of the lip 2724 to form the tab 130 can stop short of a full material thickness of the lip 2724. Even if an open lance is used, the opening in the tab 2730 can be sized such that the excess foam reaching the overflow insulation cavity 2794 will not easily pass through the opening.

As previously described, liquid foam can be sprayed or injected into the insulation cavity 2792, and the liquid foam can expand and harden as it cures. In order to fully insulate the evaporator case 206 (shown in Figure 2), the insulation cavity 2792 can be fully filled with liquid foam under pressure. It can be difficult to fill the insulation cavity 2792 precisely without slightly under-filling the insulation cavity 2792, thereby leaving voids in the insulation, or slightly over-filling the insulation cavity 2792, in which case excess insulation can leak out from the insulation cavity 2792. The overflow insulation cavity 2794 provides for a space in which over-filled foam can slowly leak into and expand-but only inside the wall as will be explained below-without compromising the aesthetics of the ice machine 100 (shown in Figure 1), such as by exposing foam insulation coming through the outer casing 120 (shown in Figure 1). For example, the insulation cavity 2792, where desirable, can be intentionally over-filled under pressure to prevent voids in the insulation, or a foaming agent such as, for example and without limitation, the aforementioned water-blown foam, can have a low viscosity and yet still not readily leak out of the assembly during foaming. The excess foam can partially leak between the vertical portion 2722 and the bottom groove wall 2790, and the insulation can expand and harden within the overflow insulation cavity 2794. The left side panel 2620 can conceal the overflow insulation cavity 2794 so foam which leaks into the overflow insulation cavity 2794 cannot be viewed by a user. The improvements described herein can also reduce or eliminate typical assembly processes (e.g., taping of joints, caulking of seams, and/or application of putty at corners) and structures (e.g., tape, caulk, and putty) and the amount of time required before foaming to prepare the foamed portion of the ice maker 110 for foaming or after foaming to clean up leaked foam.

Such movement of the excess foam into the overflow insulation activity 2794 can be limited through resistance against foam leakage into the overflow insulation cavity 2794 provided by a narrow gap 2708 defined specifically between the lip 2724 and the inclined projection 2709. The gap 2708 is an entrance to the overflow insulation cavity 2794. Resistance against foam leakage into the overflow insulation cavity 2794 can also be provided by a seal between an inner surface 2623 of the left side panel 2620 and each of the bottom groove walls 2790 and the inclined projections 2709 along the width of the left side panel 2620. Under pressure by walls of a foaming jig sufficient to hold the left side panel 2620 against each of the bottom groove walls 2790 and the inclined projections 2709, the excess foam can only travel through the gap 2708. Moreover, an offset 2870 between an outer surface 2621 of the left side panel 2620 and an adjacent outer surface of the evaporator wall 207a and also an offset 2890 between an end of the lip 2724 of the left side panel 2620 and the evaporator wall 207a in an insertion direction of the lip 2724 can ensure consistent pressure between the left side panel 2620 and each of the bottom groove walls 2790 and the inclined projections 2709-even with variations due to, for example, manufacturing tolerances in a width of the lip 2724 or in any dimension of the other parts, which variations can be absorbed by the offset 2890 or the offset 2870.

Expanding insulation that enters the overflow insulation cavity 2794 can be prevented from leaking out from between the lip 2724 of the left side panel 2620 and the top groove wall 2760 of the evaporator wall 207a by positioning the lip 2724 in close proximity to the top groove wall 2760 with the inclined projections 2709. Additionally, the interface between the lip 2724 and an inner sealing lip 2780 can provide additional protection to prevent foam from leaking outward between the lip 2724 and the top groove wall 2760. The inner sealing lip 2780 can extend between adjacent inclined projections 2709, and the lip 2724 can be positioned at least partially between the inner sealing lip 2780 and the top groove wall 2760. These features eliminate the need for assemblers to tape, seal, or putty seams between the left side panel 2620 and the evaporator wall 207a-measures which in any case can be ineffective at preventing low-viscosity water-blown foam from leaking from seams defined between the left side panel 2620 and the evaporator wall 207a but can be at least partially effective with some blown foams. Eliminating the need for taping, sealing, or puttying seams can save significant time during assembly and foaming of the insulation cavity 2794.

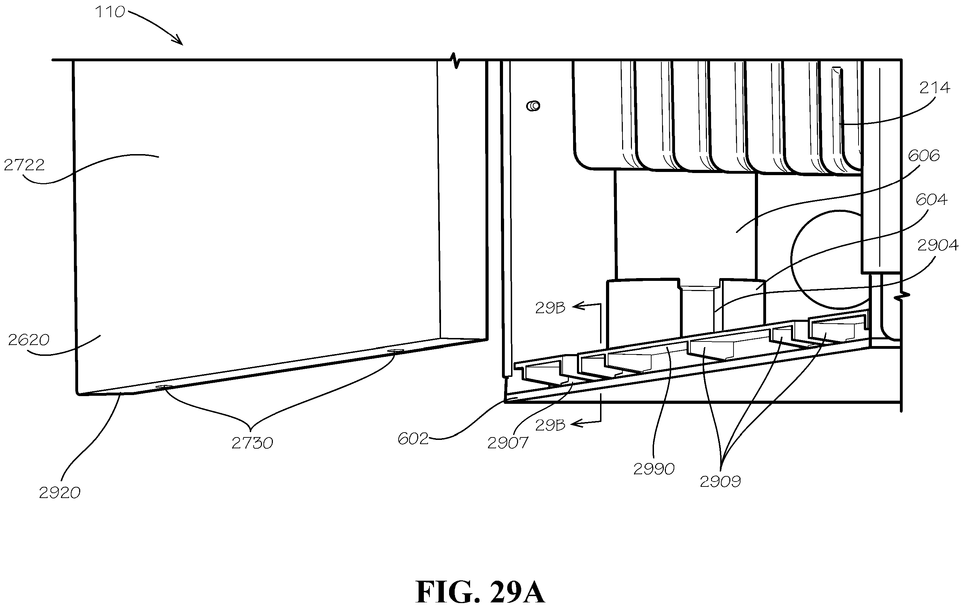

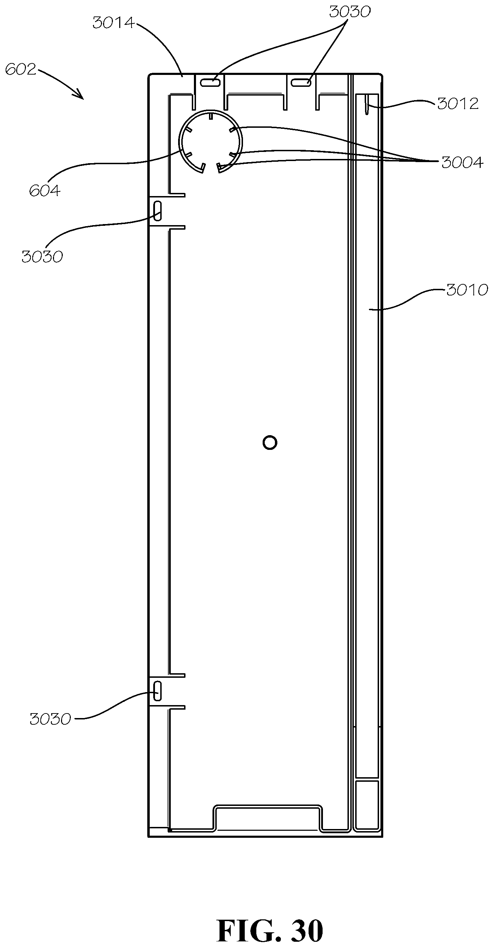

Figure 29A is a detailed perspective view of a bottom lip 2920 of the left side panel 2620 and a groove 2907 defined by the tank base 602. Similar to the groove 2707 (shown in Figure 27), the tank base 602 can define a plurality of declined projections 2909 which slope downward and inward into the groove 2907 and can be sloped projections. The declined projections 2909 can guide the bottom lip 2920 into a fully seated position inside the groove 2907. Additionally, the bottom lip 2920 can define tabs 2730, which can engage watertight pockets 3030 (shown in Figure 30) shown facing the groove 2907 which are similar to the pockets 2830 (shown in Figure 28A). As shown, the declined projections 2909 and a top groove wall 2990, which can extend between the inclined projections 2909, can extend toward the left side panel 2620 by the same distance to contact and form a seal against the left side panel 2620 during foaming of the assembly.

As previously described, at least in connection with Figure 5B, the tank base 602 can define the split collar 604 which can be configured to receive and frictionally engage a support column 606 defined by the tank 214. The split collar 604 can define a split 2904, and the split collar 604 can be configured to elastically deflect radially outward to receive and frictionally engage the support column 606.

Figure 29B shows a detailed cross-sectional view of a bottom panel end of the left side panel 2620 assembled to the tank base 602 in another of the aforementioned slide joints. Similar to the aspect of Figure 28B, in the present aspect, an overflow insulation cavity 2994 can be defined between the left side panel 2620 and the tank base 602. The groove 2907 can be defined between a top groove wall 2990 and a bottom groove wall 2960. As shown, the top groove wall 2990 can extend outwards from the tank base 602 to contact the vertical portion 2722 of the left side panel 2620. The insulation cavity 2792 can be defined above the top groove wall 2990 and inward from the vertical portion 2722 of the left side panel 2620. An overflow insulation cavity 2994 can be defined below the top groove wall 2990, above the bottom lip 2920, and between the vertical portion 2722 of the left side panel 2620 and the tank base 602. The overflow insulation cavity 2994 (positioned in Figure 29B behind the declined projection 2909) can be configured to allow controlled overflow of excess foam insulation sprayed into the insulation cavity 2994, similar to the insulation cavity 2792 (shown in Figure 28B). The tab 2730 is shown engaged with the pocket 3030.

The declined projections 2909 can position the bottom lip 2920 in close proximity to the bottom groove wall 2960 to prevent expanding insulation from leaking out from between the bottom lip 2920 of the left side panel 2620 and the bottom groove wall 2960 of the tank base 602. An inner sealing lip 2980 can provide additional protection to prevent foam from leaking outward between the bottom lip 2920 and the bottom groove wall 2960, similar to the inner sealing lip 2780 of Figure 28B. Similarly as with other portions of the evaporator case 206 including the structure shown in Figure 28B, movement of the excess foam into the overflow insulation activity 2994 can be limited through resistance against foam leakage into the overflow insulation cavity 2994 provided by a narrow gap 2908 defined specifically between the lip 2920 and the declined projection 2909. The gap 2908 can be described as an entrance to the overflow insulation cavity 2994. Resistance against foam leakage into the overflow insulation cavity 2794 can also be provided by a seal between the inner surface 2623 of the left side panel 2620 and each of the bottom groove walls 2990 and the inclined projections 2909 along the width of the left side panel 2620. Under pressure by walls of a foaming jig sufficient to hold the left side panel 2620 against each of the top groove walls 2990 and the declined projections 2909, the excess foam can only travel through the gap 2908. Moreover, an offset 2970 between the outer surface 2621 of the left side panel 2620 and the adjacent outer surface of the evaporator wall 207a and also an offset 2990 between an end of the bottom lip 2920 of the left side panel 2620 and the evaporator wall 207a in an insertion direction of the lip 2920 can ensure consistent pressure between the left side panel 2620 and each of the bottom groove walls 2990 and the declined projections 2909-even with variations due to, for example, manufacturing tolerances in a width of the lip 2920 or in any dimension of the other parts, which variations can be absorbed by the offset 2990 or the offset 2970.

Figure 29C is a detailed perspective view of a generic aspect of a corner of a one of the evaporator walls 207a,b or any other portion of the evaporator walls 207a,b, showing an inner sealing lip 2982, the inner standing ribs 2884,2984, and an outer rib 2986. The inner sealing lip 2982 can be configured to function similar to the inner sealing lip 2780 and the inner sealing lip 2980. The inner standing ribs 2884,2984 can be configured to function similar to the bottom groove wall 2790 and the top groove wall 2990. The outer rib 2986 can be configured to function similar to the top groove wall 2760 and the bottom groove wall 2960. The gaps 2708,2908 between the inner standing ribs 2884,2984 (and more specifically the sloped projections 2709,2909 at ends of the inner standing rib 2984) and the outer panel (e.g., the left side panel 2620 shown in Figure 29A, which is removed in Figure 29C but would be offset from each end of the inner standing ribs 2884,2984 when assembled to the evaporator wall 207a) can restrict foam flow from the insulation cavity 2792 into the overflow insulation cavities 2794,2994 as described above. In addition, at a corner of an interior panel such as the evaporator wall 207a, the aforementioned structures can prevent foam from escaping through gaps formed at intersections between the lips such as where a lower end of the lip 2734 (shown in Figure 27) and a front end of the bottom lip 2920 (shown in Figure 29B) meet. As shown, a dividing line 2900 can divide features 2900a and 2900b, which can be adjusted and positioned as needed on various interior panels or exterior panels throughout joints of the ice maker 110, only exemplary portions of which are explicitly shown.

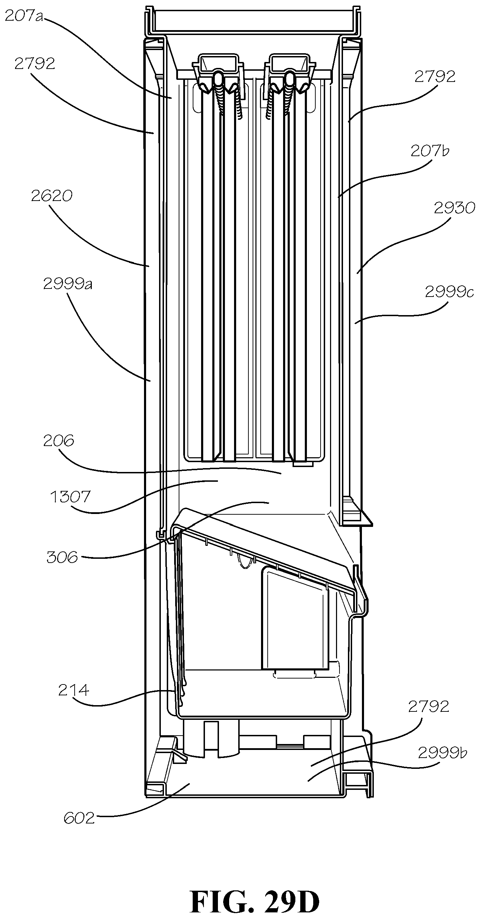

Figure 29D is a sectional perspective view of the evaporator compartment 306 looking toward the back panel 1307 of the evaporator case 206. As shown, the insulation cavity 2792 can extend around the evaporator walls 207a,b and the tank 214. A first portion 2999a of the insulation cavity 2792 can be defined between the evaporator wall 207a and the left side panel 2620. A second portion 2999b of the insulation cavity 2792 can be defined between the tank 214 and the tank base 602. A third portion 2999c of the insulation cavity 2792 can be defined between the evaporator wall 207b and an interior side panel 2930. The right side panel or interior side panel 2930 can be attached to the evaporator wall 207b similarly to the attachment of the left side panel 2620 to the evaporator wall 207a, as described with respect to Figures 26-29B. Each of the portions 2999a-c can be connected in fluid communication and can be fully filled with foam insulation in a single foaming operation.

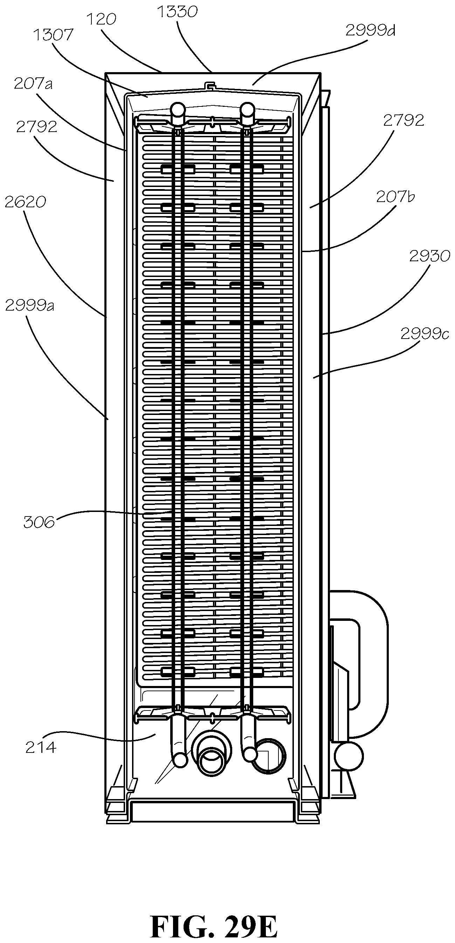

Figure 29E is a top sectional perspective view of the evaporator compartment 306 looking downwards toward the tank 214. As shown, a fourth portion 2999d of the insulation cavity 2792 can be defined between the back panel 1307 and a rear panel 3120 of the outer casing 120. The rear panel 3120 can extend between the interior side panel 2930 and the left side panel 2620 to enclose the insulation cavity 2792. The fourth portion 2999d can join the first portion 2999a to the third portion 2999c.

Figure 30 is a top view of the tank base 602 of Figure 6. The split collar 604 can define a plurality of radial projections 3004 within the split collar 604. Each of the radial projections 3004 can define a horizontal ledge by which the support column 606 (shown in Figure 29) can be supported in all three dimensions (X, Y, and Z) when it is inserted into the split collar 604. A sufficiently wide stance or diameter of the split collar 604 can support and maintain the position of the tank 214 under significant mechanical and foam pressure, which can be encountered during the foaming process while the evaporator case 206 and other portions of the ice maker 110 are inside the foaming jig. Forming the plurality of radial projections 3004 in a vertical orientation can not only facilitate manufacturing-and in particular molding-of the tank base 602 and an opening shown in the split collar 604 can allow foam to flow into the split collar 604 to ensure insulation throughout the area between the tank base 602 and the tank 214.

As previously described, the tank base 602 can define the pockets 3030. The tank base 602 can additionally define the pockets 3030 proximate to a rear end 3014 of the base 602, which can be configured to receive the rear panel 3120 (shown in Figure 31) through a similar attachment mechanism as described above for the left side panel 2620 (shown in Figure 26) with respect to the description of Figures 26-29. As desired, any sheet metal or similar thin-walled panel of the evaporator case 206 can be similarly attached to any evaporator wall of the evaporator case 206.

The tank base 602 can also define a drainage channel 3010 and a drain port 3012 leading through the rear end 3014 of the tank base 602. The drainage channel 3010 can be configured to collect water from the drain port 1662 (shown in Figure 16) of the pumping compartment 1660 (shown in Figure 16) where the water pump 212 (shown in Figure 2) can be positioned.

Figure 31 is a rear perspective view of the evaporator case 206 and a liner of the compressor base 226 with the rear panel 3120 and the interior side panel 2930 shown attached to the evaporator case 206. The rear panel 3120 and the interior side panel 2930 can attach to the evaporator case 206 as similarly described for the left side panel 2620 (shown in Figure 26) with respect to the description of Figures 26-29. As shown, a pair of bosses 3106 of the evaporator wall 207b can extend through the interior side panel 2930. As shown, the compressor base 226 can define a plurality of declined projections 3109, similar to the declined projections 2909, which can slope downward and inward. The declined projections 2909 can be configured to frictionally engage a right side panel (not shown) of the outer casing 120 (shown in Figure 1).

A plurality of exterior panels such as the left side panel 2620 (shown in Figure 28B) and a plurality of interior panels such as the evaporator wall 207a (shown in Figure 28B) together define a plurality of overflow insulation cavities 2794,2994 (2794 shown in Figure 28B, 2994 shown in Figure 29B). The standing rib 2884,2984 (shown in Figure 28B) and a wall body 2850,2950 (2850 shown in Figure 28B, 2950 shown in Figure 29B) of the interior panel and an inner surface 2623 (shown in Figure 28B) of the exterior panel define each of the plurality of overflow insulation cavities 2794,2994. At each overflow insulation cavity 2794,2994, the inner surface 2623 of the exterior panel can contact with the standing rib 2884,2984 of the interior panel 261 to define a seal therebetween. Flow of the blown foam insulation from the insulation cavity 2792 into each of the overflow insulation cavities 2794,2994 is restricted by isolating the overflow insulation cavities 2794,2994 from the insulation cavity 2792 except through a pair of the gaps 2708,2908. The first gap 2708 of the pair of gaps 2708,2908 can be defined at a first end of the standing rib 2884,2984 at least partly by a first sloped projection 2709,2909. The second gap 2908 of the pair of gaps 2708,2908 can be defined at a second end of the standing rib 2884,2984 at least partly by a second sloped projection 2709,2909. A transverse cross-sectional surface area of the overflow insulation cavity 2794,2994 at each of the first gap 2708 and the second gap 2908 can be less than a transverse cross-sectional surface area of the overflow insulation cavity 2794,2994 at a position offset from each of the first gap 2708 and the second gap 2908.

Figure 32 is an front top exploded perspective view of the evaporator walls 207a,b and the tank 214, each of Figure 2. The tank 214 can define an overflow drain 3214 disposed within the water reservoir 614. The tank 214 can further define a drainage passage 3216 in fluid communication with the overflow drain 3214 which can lead to the drainage channel 3010 (shown in Figure 30) of the tank base 602 (shown in Figure 6). In order to prevent an overflow of the tank 214, the overflow drain 3214 can be configured to drain water from the water reservoir 614 if the water level rises above a top end of the overflow drain 3214.

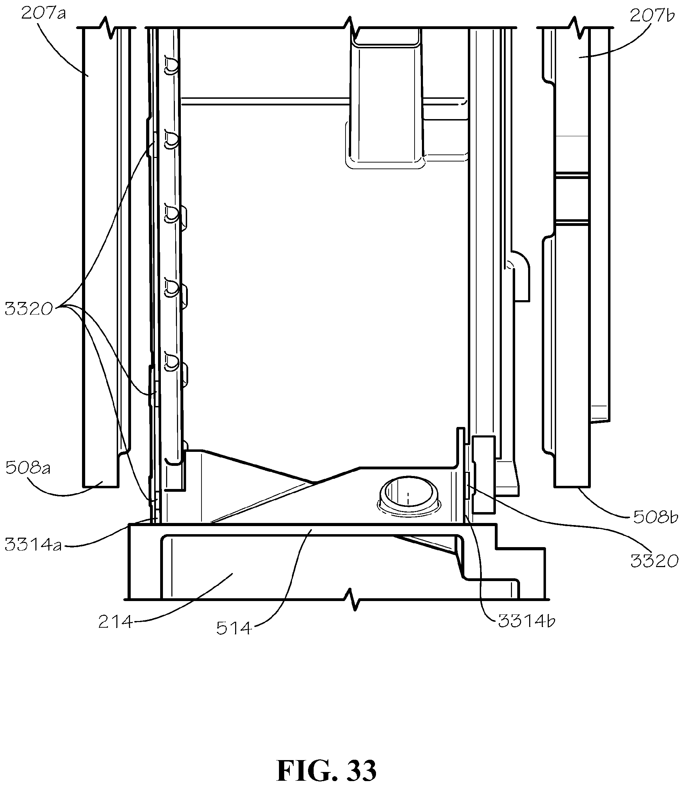

Figure 33 is a detailed front top exploded perspective view of the tank 214 and the bottom wall ends 508a,b of the evaporator walls 207a,b, respectively. The top tank end 514 can define a pair of grooves 3314a,b, which can respectively be configured to receive the bottom wall ends 508a,b of the respective evaporator walls 207a,b to attach the tank 214 to the evaporator walls 207a,b. Each of the grooves 3314a,b can define one of more slots 3320, which can extend through the respective groove 3314a,b.

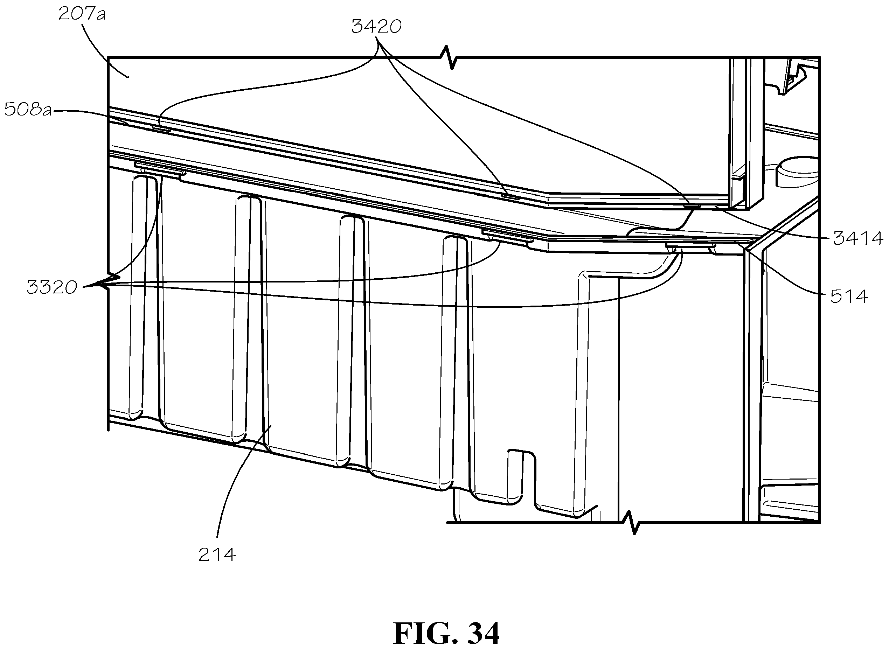

Figure 34 is a detailed exploded perspective view of the tank 214 and the bottom wall end 508a of the evaporator wall 207a. The bottom wall end 508a can define a lip 3414, which can be configured to be received by the top tank end 514 within the groove 3314a (shown in Figure 33). The lip 3414 can define tabs 3420, which can be configured to engage the slots 3320 defined by the tank 214 with a barb as shown. The evaporator wall 207b (shown in Figure 33) can define a similar lip and tabs configured to engage the groove 3314b (shown in Figure 33) and the slot 3320 (shown in Figure 33) defined within the groove 3314b.

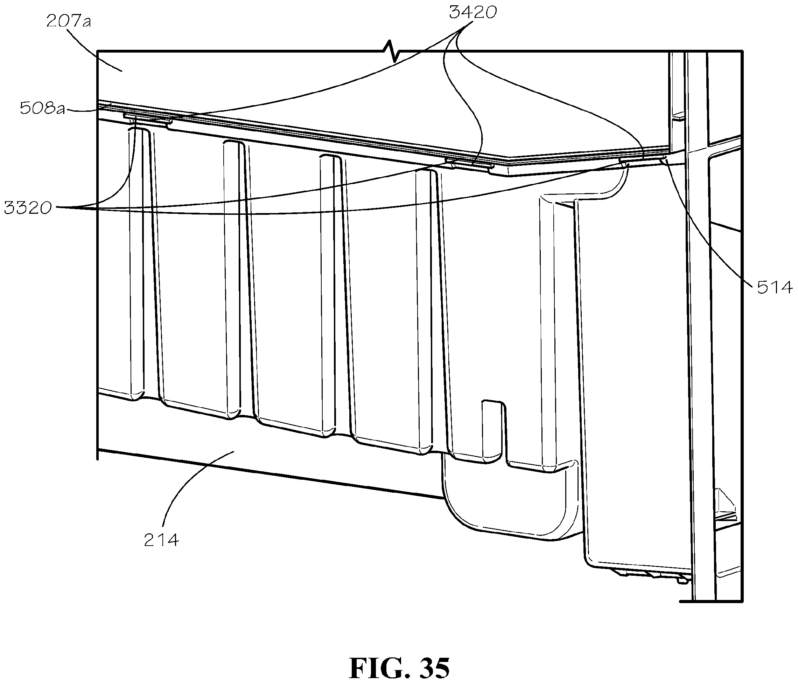

Figure 35 is a detailed perspective view of the bottom wall end 508a of the evaporator wall 207a and the top tank end 514 of the tank 214 secured together. In the present aspect, the lip 3414 (shown in Figure 34) can be received within the groove 3314a (shown in Figure 33). With the lip 3414 received within the groove 3314a, the tabs 3420 can engage the slots 3320, thereby securing the evaporator wall 207a to the tank 214. The evaporator wall 207b (shown in Figure 33) can be similarly attached to the tank 214. Engagement of the tabs 3420 with the slots 3320 can provide for a snap-together, tool-free assembly, which can save time during the assembly process.

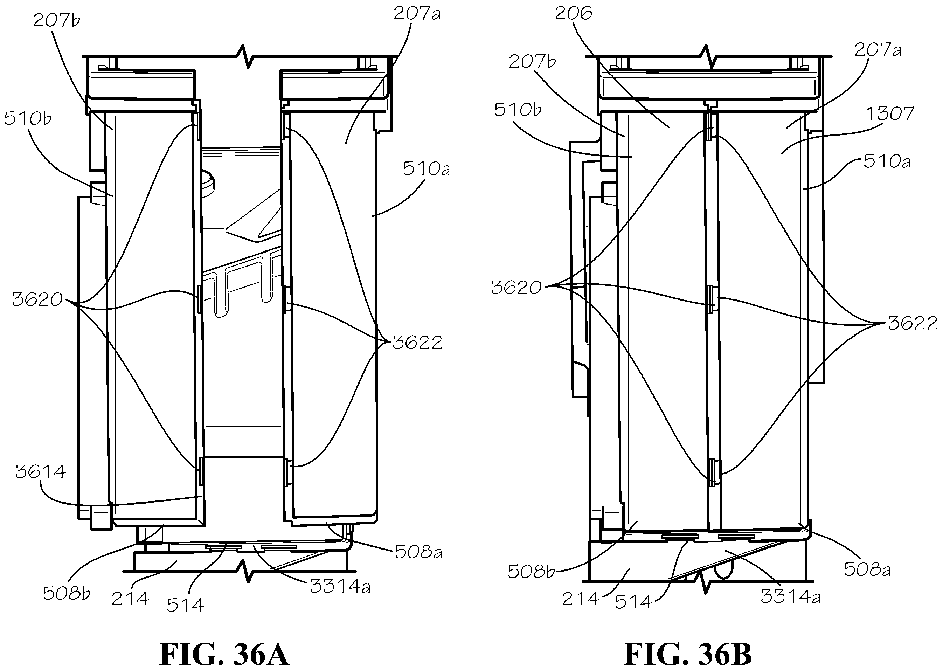

Figure 36A is a rear exploded perspective view of the evaporator walls 207a,b and the tank 214 of Figure 2A. As previously described with respect to Figure 13, each of the evaporator walls 207a,b can be substantially L-shaped, and the rear wall ends 510a,b can be connected together at a rear seam to form a back panel 1307 (shown in Figure 36B) of the evaporator case 206 (shown in Figure 36B). Similar to the grooves 3314a,b (shown in Figure 33), the evaporator wall 207a can define slots 3622, which can be similar to the slots 3320 (shown in Figure 33). The evaporator wall 207b can define a lip 3614, similar to the lip 3414 (shown in Figure 34) which can define tabs 3620, similar to the tabs 3420 (shown in Figure 34). As shown, the groove 3314a can extend around the back end of the top tank end 514, and the groove 3314a can be configured to receive the bottom wall ends 508a,b.

Figure 36B is a perspective rear view of the back panel 1307 of the evaporator case 206 attached to the tank 214. The groove (not shown) of the evaporator wall 207a can receive the lip 3614 (shown in Figure 36A) of the evaporator wall 207b.

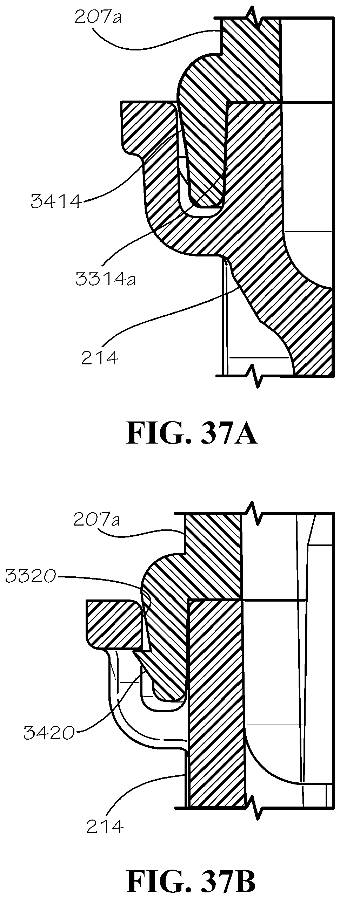

Figures 37A shows the lip 3414 of the evaporator wall 207a received within the groove 3314a defined in the tank 214, and Figure 37B shows the tab 3420 of the lip 3414 engaged with the slot 3320 of the groove 3314a (shown in Figure 37A). As shown in Figure 36B, the tabs 3620 can similarly engage the slots 3622 to secure the rear wall ends 510a,b together to form the back panel 1307 of the evaporator case 206. Once assembled, the evaporator case 206 can be seated atop the top tank end 514 of the tank 214 as previously described to attach the tank 214 to the evaporator case 206. As desired, any two thicker-walled portions of the evaporator case 206 such as, for example and without limitation, any portions of the evaporator walls 207a,b of the evaporator case 206 or, more generally, the ice maker 110, can be similarly constructed and joined.

Figure 38 is a bottom perspective view of the bottom maker end 114 of the ice maker 110 of Figure 1. As shown, the tank base 602 and the base case 205 can together define the bottom maker end 114 and the bottom opening 3814. The bottom opening 3814 can be aligned with an opening (not shown) in the top bin end 192 (shown in Figure 1) of the storage bin 190 (shown in Figure 1). The ice cubes 490 produced by the ice maker 110 can fall through the bottom opening 3814 and into storage bin 190. The ultrasonic bin sensor 290 can extend through the compressor base 226 and be positioned above the bottom opening 3814. The ultrasonic bin sensor 290 can transmit ultrasonic waves downwards through the bottom opening 3814 and into the storage bin 190 in order to measure the level of the ice cubes 490 within the storage bin 190, as previously discussed.

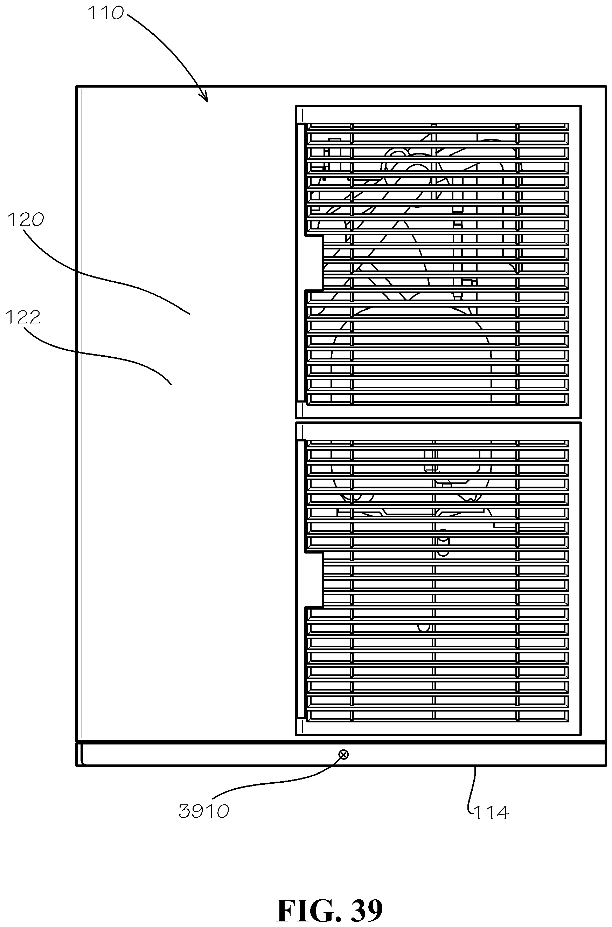

Figure 39 is a front view of the ice maker 110 of Figure 1. The front panel assembly 122 can be retained on the ice maker 110 by a fastener 3910, such as a screw, located near the bottom maker end 114. Once the fastener 3910 is loosened, the front panel assembly 122 can be lifted off and removed from the ice maker 110 to provide access for maintenance, cleaning, or any other purpose. As described elsewhere herein and shown in the figures, removal of the single fastener 3910 can facilitate access by a user to an interior of the evaporator case including the spout 1414 from a front of the ice maker without tools.

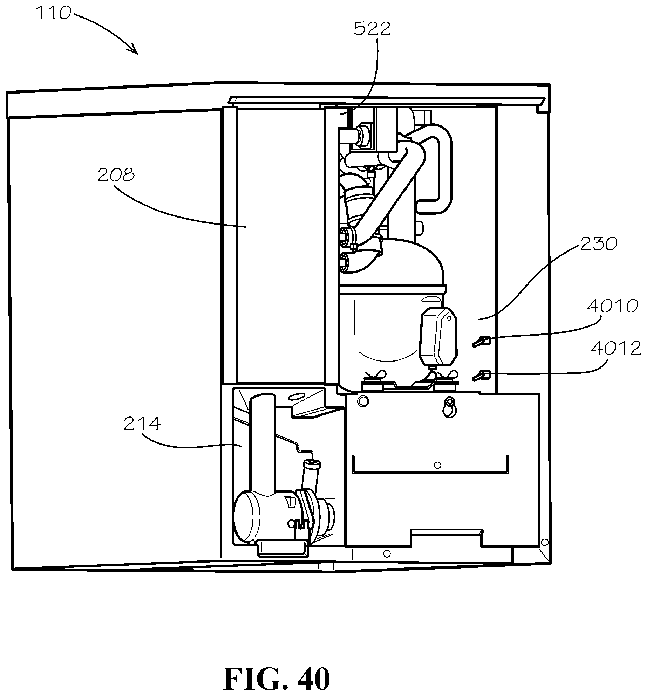

Figure 40 is a perspective view of the ice maker 110 with the front panel assembly 122 removed, exposing the control box 230, the front insulation 208, and the tank 214. By pulling the pull tab 522 of the front insulation 208, an inside portion of the wet compartment 202 (shown in Figure 2A) can be accessed, such as for cleaning. The control box 230 can comprise a first switch 4010 and a second switch 4012, both of which can be hidden behind the front panel assembly 122 to discourage tampering by unauthorized personnel. Either of the switches 4010,4012 can be a toggle switch. The first switch 4010 can be a control switch 4010, and the second switch 4012 can be a mode switch 4012.

In order to clean and sanitize the ice maker 110, the front panel assembly 122 (shown in Figure 39) can first be removed as shown. Unless otherwise specified, this step and any of the manual steps below can be performed by a user or technician of the ice machine 100. The control switch can then be switched to the "OFF" position for 3 minutes while the mode switch 4012 is in the "ICE" position. The control switch 4010 can then be moved to the "ON" position, and the front panel assembly 122 can be replaced. After 3 minutes, the front panel assembly 122 can be removed again, and the control switch 4010 can be switched to the "OFF" position. The storage bin 190 (shown in Figure 1) can then be emptied of ice and, where applicable, turned off in preparation for cleaning.

Next, the mode switch 4012 can be switched to the "CLEAN" position, and the control switch 4010 can then be moved to the "ON" position. At this time, automatic confirmation of the control switch 4010 being switched to the "ON" position can come by way of 1 short beep followed 3 seconds later by 1 long beep. The front panel assembly 122 can then be replaced. During this time, the water reservoir 614 (shown in Figure 6) of the tank 214 can be drained and filled automatically by the ice maker 110. The controller 232 of the control box 230 can next emit a beeping noise (which can be in the form of a 2-beep sequence, i.e., beep, beep, pause and then repeat), at which time the front panel assembly 122 can be removed, and the control switch 4010 can be switched to the "OFF" position. The front insulation 208 can be removed, and then a quantity of cleaning fluid, such as 10.4 fl. oz. (approximately 0.31 of Hoshizaki SCALE AWAY cleaning fluid, for example and without limitation, can be poured into the water reservoir 614 via the spout 1414 (shown in Figure 14). In some aspects, the cleaning fluid can comprise 5.4 ounces of cleaner per gallon (approximately 40 gram per liter). The control switch 4010 can then be switched to the "ON" position, at which time automatic confirmation can again come by way of the aforementioned 1 short beep followed 3 seconds later by 1 long beep, and the front panel assembly 122 can be replaced. At this time, the cleaning fluid and water mixture ("cleaning solution") can be recirculated through the water circuit 450 (shown in Figure 3). Before each cycle, a 1-minute delay can be automatically initiated to avoid excessive foaming of the cleaning solution. After automatically circulating the cleaning solution through the water circuit 450 for 30 minutes, the ice maker 110 can automatically perform 3 rinse cycles in succession. Once the controller 232 starts beeping again (which can be in the form of a 5-beep sequence), the front panel assembly 122 can be removed, and the control switch 4010 can be switched to the "OFF" position. In uses wherein the ice maker 110 is exposed to bad or severe water conditions, the power supply can be turned off to the ice maker 110, and the cube guide 550 (shown in Figure 5), the float switch 690 (shown in Figure 6), the water supply tubes, the spray tube 312 (shown in Figure 3), and the spray guides 1912a,b (shown in Figure 19) can be removed, cleaned, rinsed, and reinstalled. For example and without limitation, the components can be cleaned in a solution of warm water and Hoshizaki SCALE AWAY cleaning fluid added to the water at a rate of 5 oz. of cleaning solution to 1 gallon (approximately 37 gram per liter). of warm water.

To sanitize the ice maker 110, the mode switch 4012 can be placed in the "CLEAN" position, and the control switch 4010 can then be moved to the "ON" position, at which time automatic confirmation can again come by way of the aforementioned 1 short beep followed 3 seconds later by 1 long beep. The front panel assembly 122 can then be replaced. During this time, the water reservoir 614 of the tank 214 can automatically drain and refill. Once the control box 230 starts beeping (which can be in the form of the aforementioned 2-beep sequence), the front panel assembly 122 can be removed, and the control switch 4010 can be moved to the "OFF" position. The front insulation 208 can be removed, and then as sanitizing fluid, such as 0.6 fl. oz. (approximately 18 milliliter) of 8.25% sodium hypochlorite solution (chlorine bleach) , for example and without limitation, can be added into the water reservoir 614 of the tank 214 via the spout 1414. In some aspects, the sanitizing fluid can comprise 200 parts per million of sodium hypochlorite solution based on tank size and the strength of the active ingredient in the solution. The front insulation 208 can be replaced, and the control switch 4010 can be moved to the "ON" position, at which time automatic confirmation can come one more time by way of the aforementioned 1 short beep followed 3 seconds later by 1 long beep. Next, the front panel assembly 122 can be replaced on the ice maker 110. There can be an automatic 1-minute delay between cycles to avoid excessive foaming. After automatically circulating the sanitizing solution through the water circuit 450 for approximately 30 minutes, the ice maker 110 can then automatically perform 3 rinse cycles in succession. Once the controller 232 starts beeping (which can again be in the form of the aforementioned 5-beep sequence), the front panel assembly 122 can be removed, and the control switch 4010 can be moved to the "OFF" position. The ice storage bin 190 can then be cleaned with a neutral cleaner and rinsed thoroughly. The mode switch 4012 can then be switched back to the "ICE" position, and the control switch 4010 can then be switched back to the "ON" position to resume ice production. The front panel assembly 122 can then be reinstalled on the ice maker 110.

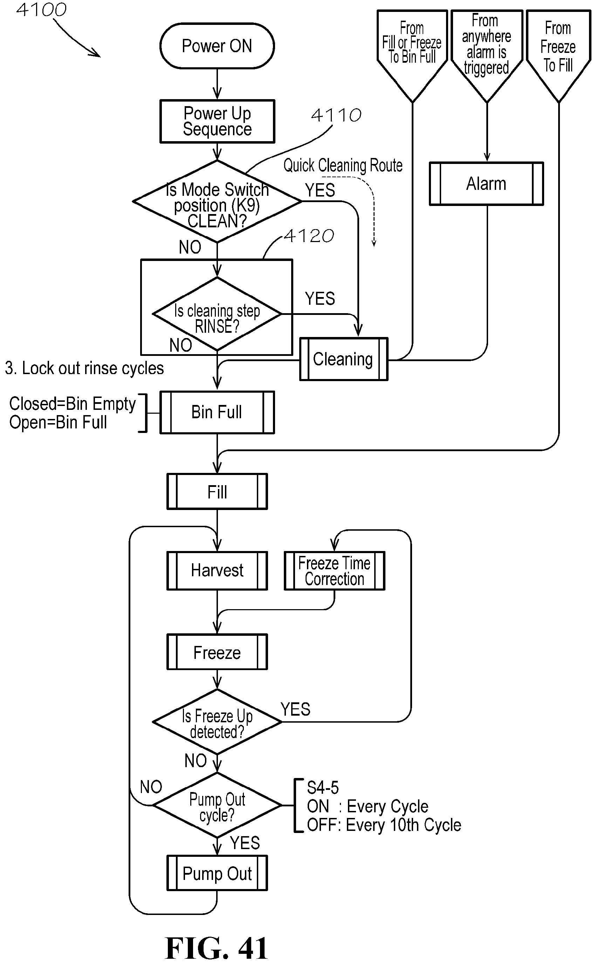

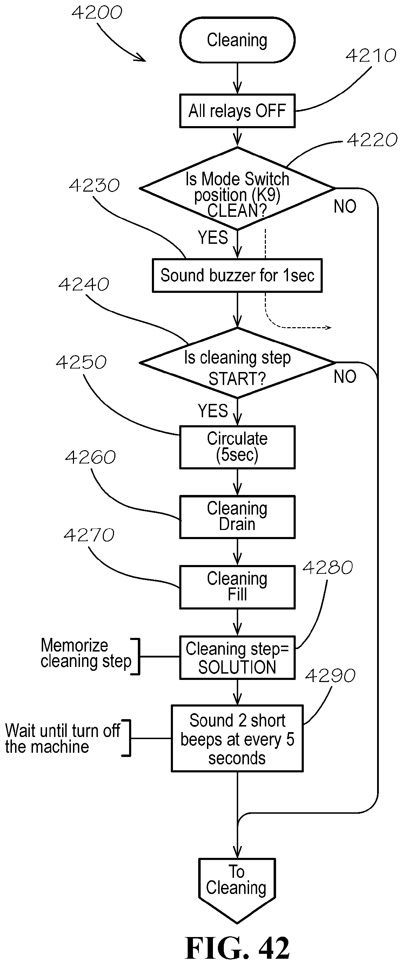

Figures 41 through 43 show flowcharts representing the operation of the controller 232 of the control box 230 with respect to at least the cleaning and sanitizing functions of an overall cleaning procedure of the ice maker. A full cycle through each of the flowcharts described below can represent either a cleaning cycle or a sanitizing cycle. As shown in Figure 41, an overall operational flowchart 4100 can comprise steps 4110 and 4120 pertaining to cleaning and sanitizing. The step 4110 can comprise the controller 232 determining whether the mode switch 4012 is in the "CLEAN" position. If the answer is NO, the step 4120 can comprise the controller 232 determining whether the cleaning step is RINSE. In addition, if the answer is NO, no cleaning cycle will be initiated by the controller 232. If the answer at either of the step 4110 or the step 4120 is YES, a cleaning cycle will be initiated starting with the steps shown in a first cleaning flowchart 4200 (shown in Figure 42).

As shown in Figure 42, the first cleaning flowchart 4200 can comprise steps 4210-4290. The step 4210 can comprise the controller 232 turning all relays in the control box 230 OFF. The step 4220 can comprise determining whether the mode switch 4012 is (still) in the CLEAN position. If the answer is NO, any subsequent steps in the first cleaning flowchart 4200 can be bypassed and the controller 232 can skip to the steps in a second cleaning flowchart 4300. If the answer is YES, a step 4230 can comprise sounding a buzzer for 1 second. A step 4240 can comprise the controller 232 determining whether the cleaning step is START. If the answer is NO, again, any subsequent steps in the first cleaning flowchart 4200 can be bypassed and the controller 232 can skip to the steps in a second cleaning flowchart 4300. If the answer is YES, a step 4250 can comprise circulating water through the water circuit 450 as exemplarily described in the flowchart or above. More specifically, the step 4250 can comprise turning the cleaning valve 354 (shown in Figure 3) ON and turning the inlet water valve 352 (shown in Figure 3) and the drain valve 356 (shown in Figure 3) OFF. A step 4260 can comprise draining the water reservoir 614 as exemplarily described in the flowchart or above. More specifically, the step 4260 can comprise turning the drain valve 356 ON and turning the inlet water valve 352 and the cleaning valve 354 OFF. A step 4270 can comprise filling the water reservoir 614 as exemplarily described in the flowchart or above. More specifically, the step 4270 can comprise turning the inlet water valve 352 ON and turning the cleaning valve 354 and the drain valve 356 OFF. A step 4280 can comprise the controller 232 setting the cleaning step to SOLUTION. A step 4290 can comprise the controller 232 sounding 2 short beeps every 5 seconds as a signal to a user to proceed to the next step-pouring in the cleaning fluid (if a cleaning cycle) or pouring in the sanitizing fluid (if a sanitizing cycle). In fact, until and including the signal to the user to pour in the cleaning fluid or the sanitizing fluid, any subset or all of the steps 4220-4290 can be automated such that no user intervention is required. The first cleaning flowchart 4200 can then transition into the second cleaning flowchart 4300.

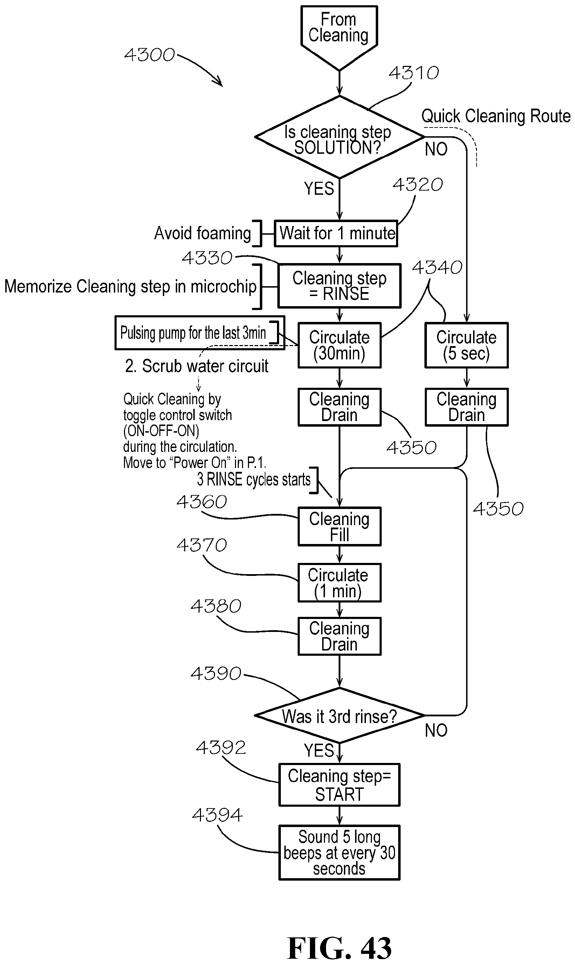

As shown in Figure 43, the second cleaning flowchart 4300 can comprise steps 4310-4390, which can follow the user's pouring in of the cleaning fluid. The step 4310 can comprise the controller 232 determining whether the cleaning step is SOLUTION. If the answer is YES, a step 4320 can comprise the controller 232 initiating a 1-minute delay timer. A step 4330 can comprise the controller 232 setting the cleaning step to RINSE. A step 4340 can comprise the controller 232 causing the water circuit 450 to circulate the cleaning solution for a period of time such as 30 minutes. During a final 3 minutes of the 30-minute period-or during any other desired proportion of a similar circulating period-the controller 232 can cause the water pump to pulsate or pulse, which can help more aggressively clean the surfaces of the water circuit 450 by in effect using a rapid pressure tap to knock off scale, calcium deposits, and other contaminants from surfaces of the water circuit. A step 4350 can comprise the controller 232 draining the water reservoir 614. If the answer at the step 4310 is NO, the controller 232 can skip directly to the step 4340 and the step 4350 (i.e., the controller 232 can bypass the rinsing step). Steps 4360-4380 can comprise a single rinse cycle. More specifically, a step 4360 can comprise the controller 232 causing the water circuit 450 to fill the water reservoir 614; a step 4370 can comprise the controller 232 causing the water pump to circulate water through the water circuit 450; and a step 4380 can comprise the controller 232 causing the water pump to drain the water reservoir 614. A step 4390 can comprise the controller 232 repeating the steps 4360-4380 until a third rinse cycle is complete. A step 4392 can comprise the controller 232 setting the cleaning step back to START (to prepare for the next full cleaning cycle in the future). A step 4394 can comprise the controller 232 sounding 5 long beeps every 10 seconds to signal to the user that the cleaning cycle is complete. Moreover, any subset or all of the steps 4310-4394 can be automated such that no user intervention is required. The aforementioned steps of the first cleaning flowchart 4200 and the second cleaning flowchart 4300 can be repeated to perform a sanitizing cycle.

The process of cleaning and sanitizing the ice maker 110 can be helpful in maintaining the quality (e.g., size, hardness, and clarity) of the ice cubes 490 and can also be helpful in removing bacteria such as pseudomonas aeruginosa bacteria from the system. Internal and regulatory testing (such as for the National Sanitation Foundation or NSF) has found that the processes described herein are capable of not only meeting regulatory requirements for hygiene but also maintaining a desirable pH level in the water in the water circuit 450 (which can be, for example, a pH value of 7 plus or minus 0.5) after cleaning and sanitizing.

Several advantages can be realized in the cleaning and sanitizing processes described herein. While in some aspects some manual interaction by the user can be required, as noted already many steps that were manually timed and/or initiated in previously implemented processes have now become automatic. In the cleaning stage, for example, 9 basic steps have become 5 steps, and all timing steps have been incorporated into the controller 232 (as manifested in various beeping signals to the user). In the sanitizing stage, 14 basic steps have become the same 5 steps followed in the cleaning stage, and again all timing steps have been incorporated into the controller 232 (as manifested in various beeping signals to the user). In previously implemented processes, a water pump hose was required to be disconnected and reconnected multiple times during each stage, and a cleaning valve was also required to be closed and opened multiple times during each stage, leading to an overall cleaning and sanitizing process that could take several hours of constant supervision, whereas with the method described herein even a two-hour long cleaning process need not be constantly supervised, as the user can walk away and return upon prompting by the beeping of the control board. The complexity of the water circuit 450 has also been significantly reduced. What previously required over 50 parts now requires only about 22 parts, a parts reduction of over 50%. This is possible by replacing the manual cleaning valve in previous implementations with the valves 352,354,356 such as shown in Figure 2C and controlling the valves 352,354,356 with the controller 232.

## Claims

1. An ice maker (110) comprising:
a dry compartment (204); and
a wet compartment (202) adjacent to the dry compartment and comprising:
an evaporator (310);
an evaporator case (206) sized to receive the evaporator, the evaporator case comprising:
a plurality of interior panels (207a, 261) joined to each other with snap-fit joints, each of the snap-fit joints comprising a tab and defining a slot, each of a plurality of seams formed between the interior panels defining a foam-tight seal and a water-tight seal; and
a plurality of exterior panels (2620), each of the plurality of exterior panels joined to a mating interior panel of the plurality of interior panels with slide joints,
wherein the evaporator case is integrally insulated with blown foam insulation positioned inside an insulation cavity (2792) defined by and between the plurality of exterior panels and the plurality of interior panels, **characterised in that** the exterior panels and the interior panels together define a plurality of overflow insulation cavities (2794, 2994), wherein a standing rib (2884, 2984) and a wall body (2850, 2950) of a respective interior panel and an interior surface (2621) of the exterior panel define a respective overflow insulation cavity (2794, 2994) of the plurality of overflow insulation cavities, wherein the respective overflow insulation cavity is arranged such that the flow of blown foam from the insulation cavity into the respective overflow insulation cavity flows through a pair of gaps (2708, 2908).

2. The ice maker of claim 1, wherein:
each of the plurality of interior panels comprises a plurality of declined projections (2909) or a plurality of inclined projections (2709) extending from a body of the respective interior panel, each of the plurality of declined projections and the plurality of inclined projections defining at least in part a groove (2707); and
each of the plurality of exterior panels comprises a lip (2724) received within the groove of a respective interior panel, the lip defining a tab (2730) engaged with a water-tight pocket (2830) defined in a surface of the respective interior panel.

3. The ice maker of claim 1 or claim 2, wherein the plurality of interior panels of the evaporator case comprises:
a first evaporator wall;
a second evaporator wall joined at a rear seam of the evaporator case to the first evaporator wall with a first set of the snap-fit joints; and
a tank (214) joined to the first evaporator wall with a second set of the snap-fit joints and to the second evaporator wall with a third set of the snap-fit joints;
wherein each snap-fit joint of the first set of the snap-fit joints, the second set of the snap-fit joints, and the third set of the snap-fit joints comprises a tab and defines a slot on respective mating parts of the first evaporator wall, the second evaporator wall, and the tank.

4. The ice maker of claim 3, wherein each of the first evaporator wall, the second evaporator wall, and the tank is integrally formed.

5. The ice maker of claim 3 or claim 4, wherein each of the tabs of the snap-fit joints defines a barb engaged with a corresponding slot of the snap-fit joints.

6. The ice maker of any of claims 3 to 5, wherein the tank defines a spout (1414) sloping downwards with respect to a horizontal orientation from a front end of the tank, the spout disposed proximate to and between a front wall end of the first evaporator wall and a front wall end of the second evaporator wall, the spout configured to direct a cleaning solution during a cleaning procedure of the ice maker into a water reservoir (614) defined by the tank.

7. The ice maker of any of claims 1 to 6, wherein the evaporator case comprises a tank (614) configured to hold water for production of ice by the ice maker, the tank comprising a projection (696) extending vertically from and formed monolithically with the tank, the ice maker further comprising:
a float switch mount (691) facing opposite sides of the projection and secured to the projection; and
a float switch (690) secured to the float switch mount, the float switch configured to sense a level of the water in the tank.

8. The ice maker of any of claims 1 to 7, further comprising:
a spray tube (312) positioned proximate to a top end of the evaporator case and above the evaporator and coupled to the evaporator, the spray tube comprising:
an upper half; and
a lower half permanently and sealably joined to the upper half, the upper half and the lower half defining an opening extending across more than half of a horizontal width of a tube portion of the spray tube, the spray tube configured to spray water onto the evaporator to produce ice.

9. The ice maker of any of claims 1 to 8, further comprising an evaporator bracket (1310a) securing the evaporator to a top end of the evaporator case, and a spray tube positioned proximate to the top end of the evaporator case and above the evaporator, the spray tube comprising a lever arm (1712a,b) engaged with the evaporator bracket.

10. The ice maker of any of claims 1 to 9, further comprising the evaporator secured to a plurality of integrally formed evaporator brackets, each of a first evaporator wall and a second evaporator wall of the evaporator case defining a watertight pocket (2830) in an inner ledge (2207a,b), a tab of each of the evaporator brackets received within the pocket of a corresponding evaporator wall of the first evaporator wall and the second evaporator wall.

11. The ice maker of any of claims 1 to 10, further comprising a top insulation (210) facing a top end of the evaporator and received between a first evaporator wall and a second evaporator wall of the evaporator case, the top insulation comprising tabs extending from opposing sides of a front insulation end of the top insulation, each of the tabs received within a notch (2404) defined in each of the first evaporator wall and the second evaporator wall, the tabs securing the top insulation to the first evaporator wall and the second evaporator wall.

12. The ice maker of any of claims 1 to 11, further comprising:
an electrical circuit comprising a main controller (232);
a refrigeration circuit (400) comprising the evaporator; and
a water circuit (450) comprising:
an inlet water valve (325) configured to receive and regulate water entering the ice maker;
a drain valve (356) configured to receive and regulate water exiting the ice maker; and
a cleaning valve (354) positioned between the inlet water valve and the drain valve;
wherein each of the inlet water valve, the drain valve, and the cleaning valve is in electrical communication with and controlled by the main controller, water in the water circuit configured to produce ice during an ice formation cycle and clean the evaporator during a cleaning cycle by operation of each of the inlet water valve, the drain valve, and the cleaning valve by the main controller.

13. The ice maker of any of claims 1 to 12, comprising an offset (2870) between an outer surface (2621) of a respective exterior panel (2620) and an adjacent outer surface of a respective interior panel (207a) and an offset (2890) between an end of a lip (2724) of the exterior panel (2620) and the respective interior panel in an insertion direction of the lip (2724).

14. A method of manufacturing the ice maker of claim 1, the method comprising:
assembling a plurality of interior panels of an evaporator case to each other with snap-fit joints by inserting a tab of each snap-fit joint into a corresponding slot of the snap-fit joint;
forming a foam-tight seal and a water-tight seal at seams defined by connections between the interior panels;
assembling a plurality of exterior panels to the interior panels with slide joints by inserting a lip of each slide joint into a corresponding groove of the slide joint, the groove defined at least in part by one of a plurality of sloped projections (2709) defined in a respective interior panel; and
insulating the evaporator case with blown foam insulation positioned inside an insulation cavity defined by and between the plurality of exterior panels and the plurality of interior panels, **characterised in that** the exterior panels and the interior panels together define a plurality of overflow insulation cavities (2794, 2994), wherein a standing rib (2884, 2984) and a wall body (2850, 2950) of a respective interior panel and an interior surface (2621) of the exterior panel define a respective overflow insulation cavity of the plurality of overflow insulation cavities (2794, 2994),
wherein the insulating comprises flowing the blown foam from the insulation cavity into the respective overflow insulation cavity through a pair of gaps (2708, 2908).

15. The method of claim 14, further comprising:
forming a projection (696) in a tank defining a bottom of the evaporator case, the projection extending vertically from and formed monolithically with the tank;
securing a float switch (690) to a float switch mount; and
securing the float switch mount to the projection, the float switch mount facing opposite sides of the projection after assembly, the float switch configured to sense a level of water in the tank.

16. The method of claim 14 or claim 15, the method further comprising, at each overflow insulation cavity of the plurality of overflow insulation cavities (2794, 2994):
contacting the interior surface of the exterior panel with the standing rib of the interior panel to define a primary seal; and
restricting flow of the insulation from the insulation cavity into the overflow insulation cavity, the overflow insulation cavity isolated from the insulation cavity except through the pair of gaps, a first gap (2708) of the pair of gaps defined at a first end of the standing rib at least partly by a first sloped projection (2709, 2909) and a second gap (2908) of the pair of gaps defined at a second end of the standing rib at least in part by a second sloped projection (2709, 2909), a transverse cross-sectional surface area of the overflow insulation cavity at each of the first gap and the second gap being less than a transverse cross-sectional surface area of the overflow insulation cavity at a position offset from each of the first gap and the second gap.

## Patentansprüche

1. Eismaschine (110), umfassend:
ein Trockenfach (204) und
ein Nassfach (202), angrenzend an das Trockenfach und umfassend:
einen Verdampfer (310);
ein Verdampfergehäuse (206), das dazu bemessen ist, den Verdampfer aufzunehmen, wobei das Verdampfergehäuse umfasst:
eine Vielzahl von internen Platten (207a, 261), die mit Schnappverbindungen miteinander verbunden sind, wobei jede der Schnappverbindungen eine Lasche umfasst und einen Schlitz definiert, wobei jede von einer Vielzahl von Fugen, die zwischen den internen Platten gebildet sind, eine schaumfeste Dichtung und eine wasserfeste Dichtung definiert; und
eine Vielzahl von externen Platten (2620), wobei jede von der Vielzahl von externen Platten mit Schiebeverbindungen mit einer zusammenpassenden internen Platte der Vielzahl von internen Platten verbunden ist,
wobei das Verdampfergehäuse mit einer Isolierung aus getriebenem Schaum, die im Inneren eines Isolierungshohlraums (2792), der von der Vielzahl von externen Platten und der Vielzahl von internen Platten und zwischen diesen definiert wird, positioniert ist, integral isoliert ist, **dadurch gekennzeichnet, dass** die externen Platten und die internen Platten zusammen eine Vielzahl von Überlaufisolierungshohlräumen (2794, 2994) definieren, wobei eine aufrechte Rippe (2884, 2984) und ein Wandkörper (2850, 2950) einer jeweiligen internen Platte und eine Innenfläche (2621) der externen Platte einen jeweiligen Überlaufisolierungshohlraum (2794, 2994) der Vielzahl von Überlaufisolierungshohlräumen definieren, wobei der jeweilige Überlaufisolierungshohlraum derart eingerichtet ist, dass der Fluss von getriebenem Schaum aus dem Isolierungshohlraum in den jeweiligen Überlaufisolierungshohlraum durch ein Paar von Lücken (2708, 2908) fließt.

2. Eismaschine nach Anspruch 1, wobei:
jede von der Vielzahl von internen Platten eine Vielzahl von abschüssigen Vorsprüngen (2909) oder eine Vielzahl von geneigten Vorsprüngen (2709) umfasst, die sich von einem Körper der jeweiligen internen Platte erstrecken, wobei jede von der Vielzahl von abschüssigen Vorsprüngen und der Vielzahl von geneigten Vorsprüngen zumindest zum Teil eine Nut (2707) definiert; und
jede von der Vielzahl von externen Platten eine Lippe (2724) umfasst, die innerhalb der Nut einer jeweiligen internen Platte aufgenommen wird, wobei die Lippe eine Lasche (2730) definiert, die mit einer wasserbeständigen Tasche (2830) im Eingriff steht, die in einer Fläche der jeweiligen internen Platte definiert ist.

3. Eismaschine nach Anspruch 1 oder Anspruch 2, wobei die Vielzahl von internen Platten des Verdampfergehäuses umfasst:
eine erste Verdampferwand;
eine zweite Verdampferwand, die an einer hinteren Fuge des Verdampfergehäuses mit einem ersten Satz der Schnappverbindungen mit der ersten Verdampferwand verbunden ist; und
einen Tank (214), der mit einem zweiten Satz der Schnappverbindungen mit der ersten Verdampferwand und mit einem dritten Satz der Schnappverbindungen mit der zweiten Verdampferwand verbunden ist;
wobei jede Schnappverbindung des ersten Satzes der Schnappverbindungen, des zweiten Satzes der Schnappverbindungen und des dritten Satzes der Schnappverbindungen eine Lasche umfasst und einen Schlitz auf jeweiligen zusammenpassenden Teilen der ersten Verdampferwand, der zweiten Verdampferwand und des Tanks definiert.

4. Eismaschine nach Anspruch 3, wobei jede bzw. jeder von der ersten Verdampferwand, der zweiten Verdampferwand und dem Tank integral ausgebildet ist.

5. Eismaschine nach Anspruch 3 oder Anspruch 4, wobei jede der Laschen der Schnappverbindungen einen Widerhaken definiert, der mit einem entsprechenden Schlitz der Schnappverbindungen im Eingriff steht.

6. Eismaschine nach einem der Ansprüche 3 bis 5, wobei der Tank einen Auslauf (1414) definiert, der sich in Bezug auf eine horizontale Ausrichtung von einem vorderen Ende des Tanks nach unten neigt, wobei der Auslauf nahe und zwischen einem vorderen Wandende der ersten Verdampferwand und einem vorderen Wandende der zweiten Verdampferwand angeordnet ist, wobei der Auslauf dazu konfiguriert ist, eine Reinigungslösung während eines Reinigungsvorgangs an der Eismaschine in ein Wasserreservoir (614) zu leiten, das von dem Tank definiert wird.

7. Eismaschine nach einem der Ansprüche 1 bis 6, wobei das Verdampfergehäuse einen Tank (614) umfasst, der dazu konfiguriert ist, Wasser zur Produktion von Eis durch die Eismaschine zu fassen, wobei der Tank einen Vorsprung (696) umfasst, der sich vertikal von dem Tank erstreckt und monolithisch mit diesem ausgebildet ist, wobei die Eismaschine weiterhin umfasst:
eine Schwimmerschalterhalterung (691), die entgegengesetzten Seiten des Vorsprungs zugewandt ist und an dem Vorsprung gesichert ist; und
einen Schwimmerschalter (690), der an der Schwimmerschalterhalterung gesichert ist, wobei der Schwimmerschalter dazu konfiguriert ist, einen Pegel des Wassers in dem Tank zu erfassen.

8. Eismaschine nach einem der Ansprüche 1 bis 7, weiterhin umfassend:
ein Sprührohr (312), das nahe einem oberen Ende des Verdampfergehäuses und über dem Verdampfer positioniert ist und an den Verdampfer gekoppelt ist,
wobei das Sprührohr umfasst:
eine obere Hälfte und
eine untere Hälfte, die permanent und abdichtbar mit der oberen Hälfte verbunden ist, wobei die obere Hälfte und die untere Hälfte eine Öffnung definieren, die sich über mehr als die Hälfte einer horizontalen Breite eine Rohrabschnitts des Sprührohrs erstreckt, wobei das Sprührohr dazu konfiguriert ist, Wasser auf den Verdampfer zu sprühen, um Eis zu produzieren.

9. Eismaschine nach einem der Ansprüche 1 bis 8, weiterhin umfassend eine Verdampferklammer (1310a), die den Verdampfer an einem oberen Ende des Verdampfergehäuses sichert, und ein Sprührohr, das nahe einem oberen Ende des Verdampfergehäuses und über dem Verdampfer positioniert ist, wobei das Sprührohr einen Hebelarm (1712a, b) umfasst, der mit der Verdampferklammer im Eingriff steht.

10. Eismaschine nach einem der Ansprüche 1 bis 9, weiterhin umfassend den Verdampfer, der an einer Vielzahl von integral ausgebildeten Verdampferklammern gesichert ist, wobei jede von einer ersten Verdampferwand und einer zweiten Verdampferwand des Verdampfergehäuses eine wasserbeständige Tasche (2830) in einem inneren Absatz (2207a, b) definiert, wobei eine Lasche jeder der Verdampferklammern innerhalb der Tasche einer entsprechenden Verdampferwand von der ersten Verdampferwand und der zweiten Verdampferwand aufgenommen wird.

11. Eismaschine nach einem der Ansprüche 1 bis 10, weiterhin umfassend eine obere Isolierung (210), die einem oberen Ende des Verdampfers zugewandt ist und zwischen einer ersten Verdampferwand und einer zweiten Verdampferwand des Verdampfergehäuses aufgenommen wird, wobei die obere Isolierung Laschen umfasst, die sich von entgegengesetzten Seiten eines vorderen Isolierungsendes der oberen Isolierung erstrecken, wobei jede der Laschen innerhalb einer Kerbe (2404) aufgenommen wird, die in jeder von der ersten Verdampferwand und der zweiten Verdampferwand definiert ist, wobei die Laschen die obere Isolierung an der ersten Verdampferwand und der zweiten Verdampferwand sichern.

12. Eismaschine nach einem der Ansprüche 1 bis 11, weiterhin umfassend:
einen Stromkreis, umfassend eine Hauptsteuerung (232) ;
einen Kältekreislauf (400), umfassend den Verdampfer; und
einen Wasserkreislauf (450), umfassend:
ein Einlasswasserventil (325), das dazu konfiguriert ist, Wasser, das in die Eismaschine eintritt, aufzunehmen und zu regeln;
ein Ablassventil (356), das dazu konfiguriert ist, Wasser, das aus der Eismaschine austritt, aufzunehmen und zu regeln; und
ein Reinigungsventil (354), das zwischen dem Einlasswasserventil und dem Ablassventil positioniert ist;
wobei jedes von dem Einlasswasserventil, dem Ablassventil und dem Reinigungsventil in elektrischer Verbindung mit der Hauptsteuerung steht und von dieser gesteuert wird, wobei Wasser in dem Wasserkreislauf dazu konfiguriert ist, Eis während eines Eisbildungszyklus zu produzieren und den Verdampfer während eines Reinigungszyklus durch Betreiben jedes von dem Einlasswasserventil, dem Ablassventil und dem Reinigungsventil durch die Hauptsteuerung zu reinigen.

13. Eismaschine nach einem der Ansprüche 1 bis 12, umfassend einen Versatz (2870) zwischen einer Außenfläche (2621) einer jeweiligen externen Platte (2620) und einer angrenzenden Außenfläche einer jeweiligen internen Platte (207a) und einen Versatz (2890) zwischen einem Ende einer Lippe (2724) der externen Platte (2620) und der jeweiligen internen Platte in einer Einführungsrichtung der Lippe (2724).

14. Verfahren zur Fertigung der Eismaschine nach Anspruch 1, wobei das Verfahren umfasst:
Zusammenfügen einer Vielzahl von internen Platten eines Verdampfergehäuses aneinander mit Schnappverbindungen durch Einführen einer Lasche jeder Schnappverbindung in einen entsprechenden Schlitz der Schnappverbindung;
Bilden einer schaumfesten Dichtung einer wasserfesten Dichtung an Fugen, die von Verbindungen zwischen den internen Platten definiert werden;
Zusammenfügen einer Vielzahl von externen Platten an den internen Platten mit Schiebeverbindungen durch Einführen einer Lippe jeder Schiebeverbindung in eine entsprechende Nut der Schiebeverbindung, wobei die Nut zumindest zum Teil von einer von einer Vielzahl von abgeschrägten Vorsprüngen (2709) definiert wird, die in einer jeweiligen internen Platte definiert sind; und
Isolieren des Verdampfergehäuses mit einer Isolierung aus getriebenem Schaum, die im Inneren eines Isolierungshohlraums, der von der Vielzahl von externen Platten und der Vielzahl von internen Platten und zwischen diesen definiert wird, positioniert ist, **dadurch gekennzeichnet, dass** die externen Platten und die internen Platten zusammen eine Vielzahl von Überlaufisolierungshohlräumen (2794, 2994) definieren, wobei eine aufrechte Rippe (2884, 2984) und ein Wandkörper (2850, 2950) einer jeweiligen internen Platte und eine Innenfläche (2621) der externen Platte einen jeweiligen Überlaufisolierungshohlraum der Vielzahl von Überlaufisolierungshohlräumen (2794, 2994) definieren,
wobei das Isolieren ein Fließenlassen des getriebenen Schaums aus dem Isolierungshohlraum durch ein Paar von Lücken (2708, 2908) in den jeweiligen Überlaufisolierungshohlraum umfasst.

15. Verfahren nach Anspruch 14, weiterhin umfassend:
Bilden eines Vorsprungs (696) in einem Tank, der einen Boden des Verdampfergehäuses definiert, wobei der Vorsprung sich vertikal von dem Tank erstreckt und monolithisch mit diesem ausgebildet ist;
Sichern eines Schwimmerschalters (690) an einer Schwimmerschalterhalterung und
Sichern der Schwimmerschalterhalterung an dem Vorsprung, wobei die Schwimmerschalterhalterung nach dem Zusammenfügen entgegengesetzten Seiten des Vorsprungs zugewandt ist, wobei der Schwimmerschalter dazu konfiguriert ist, einen Wasserpegel im Tank zu erfassen.

16. Verfahren nach Anspruch 14 oder Anspruch 15, wobei das Verfahren weiterhin an jedem Überlaufisolierungshohlraum der Vielzahl von Überlaufisolierungshohlräumen (2794, 2994) umfasst:
Inkontaktbringen der Innenfläche der externen Platte mit der aufrechten Rippe der internen Platte, um eine primäre Dichtung zu definieren; und
Einschränken eines Flusses der Isolierung aus dem Isolierungshohlraum in den Überlaufisolierungshohlraum, wobei der Überlaufisolierungshohlraum von dem Isolierungshohlraum isoliert ist, ausgenommen von durch das Paar von Lücken, wobei eine erste Lücke (2708) des Paars von Lücken an einem ersten Ende der aufrechten Rippe zumindest zum Teil von einem ersten abgeschrägten Vorsprung (2709, 2909) definiert wird und eine zweite Lücke (2908) des Paars von Lücken an einem zweiten Ende der aufrechten Rippe zumindest zum Teil von einem zweiten abgeschrägten Vorsprung (2709, 2909) definiert wird, wobei ein Querschnittsoberflächenbereich des Überlaufisolierungshohlraums an jeder von der ersten Lücke und der zweiten Lücke kleiner als ein Querschnittsoberflächenbereich des Überlaufisolierungshohlraums an einer Position ist, die von jeder von der ersten Lücke und der zweiten Lücke versetzt ist.

## Revendications

1. Une machine de production de glaçons (110) comprenant :
un compartiment sec (204) ; et
un compartiment humide (202) adjacent au compartiment sec et comprenant :
un évaporateur (310) ;
un boîtier d'évaporateur (206) dimensionné pour recevoir l'évaporateur, le boîtier d'évaporateur comprenant :
une pluralité de panneaux intérieurs (207a, 261) reliés les uns aux autres avec des fixations par encliquetage, chacune des fixations par encliquetage comprenant une languette et définissant une fente, chaque soudure d'une pluralité de soudures formées entre les panneaux intérieurs définissant un joint étanche à la mousse et un joint étanche à l'eau ; et
une pluralité de panneaux extérieurs (2620), chaque panneau de la pluralité de panneaux extérieurs étant relié à un panneau intérieur correspondant de la pluralité de panneaux intérieurs avec des fixations coulissantes,
dans laquelle le boîtier d'évaporateur est isolé intégralement par une isolation par mousse projetée positionnée à l'intérieur d'une cavité d'isolation (2792) définie par et entre la pluralité de panneaux extérieurs et la pluralité de panneaux intérieurs, **caractérisé en ce que** les panneaux extérieurs et les panneaux intérieurs définissent ensemble une pluralité de cavités d'isolation de trop-plein (2794, 2994), dans laquelle une nervure verticale (2884, 2984) et un corps de paroi (2850, 2950) d'un panneau intérieur respectif et une surface intérieure (2621) du panneau extérieur définissent une cavité d'isolation de trop-plein respective (2794, 2994) de la pluralité de cavités d'isolation de trop-plein, dans laquelle la cavité d'isolation de trop-plein respective est agencée de telle sorte que l'écoulement de mousse projetée de la cavité d'isolation dans la cavité d'isolation de trop-plein respective s'écoule à travers une paire d'espaces (2708, 2908).

2. La machine de production de glaçons selon la revendication 1, dans laquelle :
chaque panneau de la pluralité de panneaux intérieurs comprend une pluralité de saillies déclinées (2909) ou une pluralité de saillies inclinées (2709) s'étendant d'un corps du panneau intérieur respectif, chaque saillie de la pluralité de saillies déclinées et de la pluralité de saillies inclinées définissant au moins en partie une rainure (2707) ; et
chaque panneau de la pluralité de panneaux extérieurs comprend une lèvre (2724) reçue dans la rainure d'un panneau intérieur respectif, la lèvre définissant une languette (2730) en prise avec une poche étanche à l'eau (2830) définie dans une surface du panneau intérieur respectif.

3. La machine de production de glaçons selon la revendication 1 ou la revendication 2, dans laquelle la pluralité de panneaux intérieurs du boîtier d'évaporateur comprend :
une première paroi d'évaporateur ;
une deuxième paroi d'évaporateur reliée à une soudure arrière du boîtier d'évaporateur à la première paroi d'évaporateur avec un premier ensemble de fixations par encliquetage ; et
un réservoir (214) relié à la première paroi d'évaporateur avec un deuxième ensemble de fixations par encliquetage et à la deuxième paroi d'évaporateur avec un troisième ensemble de fixations par encliquetage ;
dans laquelle chaque fixation par encliquetage du premier ensemble de fixations par encliquetage, du deuxième ensemble de fixations par encliquetage et du troisième ensemble de fixations par encliquetage comprend une languette et définit une fente sur des parties correspondantes respectives de la première paroi d'évaporateur, de la deuxième paroi d'évaporateur et du réservoir.

4. La machine de production de glaçons selon la revendication 3, dans laquelle chacune de la première paroi d'évaporateur, de la deuxième paroi d'évaporateur et du réservoir est formé d'un seul tenant.

5. La machine de production de glaçons selon la revendication 3 ou la revendication 4, dans laquelle chacune des languettes des fixations par encliquetage définit une barbe en prise avec une fente correspondante des fixations par encliquetage.

6. La machine de production de glaçons selon l'une quelconque des revendications 3 à 5, dans laquelle le réservoir définit une bec verseur (1414) incliné vers le bas par rapport à une orientation horizontale depuis une extrémité avant du réservoir, le bec verseur étant disposé à proximité et entre une extrémité de paroi avant de la première paroi d'évaporateur et une extrémité de paroi avant de la deuxième paroi d'évaporateur, le bec verseur étant configuré pour diriger une solution de nettoyage d'une procédure de nettoyage de la machine de production de glaçons dans un réservoir d'eau (614) défini par le réservoir.

7. La machine de production de glaçons selon l'une quelconque des revendications 1 à 6, dans laquelle le boîtier d'évaporateur comprend un réservoir (614) configuré pour contenir l'eau pour la production de glaçons par la machine de production de glaçons, le réservoir comprenant une saillie (696) s'étendant à la verticale et formée de manière monolithique avec le réservoir, la machine de production de glaçons comprenant en outre :
une monture d'interrupteur à flotteur (691) face à des côtés opposés de la saillie et fixée à la saillie ; et
un interrupteur à flotteur (690) fixé à la monture d'interrupteur à flotteur, l'interrupteur à flotteur étant configuré pour détecter un niveau de l'eau dans le réservoir.

8. La machine de production de glaçons selon l'une quelconque des revendications 1 à 7, comprenant en outre :
un tube de pulvérisation (312) positionné à proximité d'une extrémité supérieure du boîtier d'évaporateur et au-dessus de l'évaporateur et couplé à l'évaporateur, le tube de pulvérisation comprenant :
une moitié supérieure ; et
une moitié inférieure reliée de manière permanente et étanche à la moitié supérieure, la moitié supérieure et la moitié inférieure définissant une ouverture s'étendant sur plus de la moitié d'une largeur horizontale d'une partie tube du tube de pulvérisation, le tube de pulvérisation étant configuré pour pulvériser de l'eau sur l'évaporateur pour produire de la glace.

9. La machine de production de glaçons selon l'une quelconque des revendications 1 à 8, comprenant en outre un support d'évaporateur (1310a) fixant l'évaporateur à une extrémité supérieure du boîtier d'évaporateur, et un tube de pulvérisation positionné à proximité de l'extrémité supérieure du boîtier d'évaporateur et au-dessus de l'évaporateur, le tube de pulvérisation comprenant un bras de levier (1 712a,b) en prise avec le support d'évaporateur.

10. La machine de production de glaçons selon l'une quelconque des revendications 1 à 9, comprenant en outre l'évaporateur fixé à une pluralité de supports d'évaporateur formés d'un seul tenant, chacune d'une première paroi d'évaporateur et d'une deuxième paroi d'évaporateur du boîtier d'évaporateur définissant une poche étanche à l'eau (2830) dans un rebord intérieur (2207a,b), une languette de chacun des supports d'évaporateur étant reçue dans la poche d'une paroi d'évaporateur correspondante de la première paroi d'évaporateur et de la deuxième paroi d'évaporateur.

11. La machine de production de glaçons selon l'une quelconque des revendications 1 à 10, comprenant en outre une isolation supérieure (210) face à une extrémité supérieure de l'évaporateur et reçue entre une première paroi d'évaporateur et une deuxième paroi d'évaporateur du boîtier d'évaporateur, l'isolation supérieure comprenant des languettes s'étendant de côtés opposés d'une extrémité d'isolation avant de l'isolation supérieure, chacune des languettes étant reçue dans une encoche (2404) définie dans chacune de la première paroi d'évaporateur et de la deuxième paroi d'évaporateur, les languettes fixant l'isolation supérieure à la première paroi d'évaporateur et à la deuxième paroi d'évaporateur.

12. La machine de production de glaçons selon l'une quelconque des revendications 1 à 11, comprenant en outre :
un circuit électrique comprenant une unité de commande principale (232) ;
un circuit de réfrigération (400) comprenant l'évaporateur ; et
un circuit d'eau (450) comprenant :
une vanne d'entrée d'eau (325) configurée pour recevoir et réguler l'eau entrant dans la machine de production de glaçons ;
une vanne de vidange (356) configurée pour recevoir et réguler l'eau sortant de la machine de production de glaçons ; et
une vanne de nettoyage (354) positionnée entre la vanne d'entrée d'eau et la vanne de vidange ;
dans laquelle chacune de la vanne d'entrée d'eau, la vanne de vidange et la vanne de nettoyage est en communication électrique avec et commandée par l'unité de commande principale, l'eau dans le circuit d'eau étant configurée pour produire des glaçons pendant un cycle de formation de glaçons et nettoyer l'évaporateur pendant un cycle de nettoyage par l'actionnement de chacune de la vanne d'entrée d'eau, la vanne de vidange et la vanne de nettoyage par l'unité de commande principale.

13. La machine de production de glaçons selon l'une quelconque des revendications 1 à 12, comprenant un décalage (2870) entre une surface extérieure (2621) d'un panneau extérieur respectif (2620) et d'une surface extérieure adjacente d'un panneau intérieur respectif (207a), et un décalage (2890) entre une extrémité d'une lèvre (2724) du panneau extérieur (2620) et le panneau intérieur respectif dans une direction d'introduction de la lèvre (2724).

14. Un procédé de fabrication d'une machine de production de glaçons selon la revendication 1, le procédé consistant à :
assembler une pluralité de panneaux intérieurs d'un boîtier d'évaporateur les uns avec les autres avec des fixations par encliquetage en introduisant une languette de chaque fixation par encliquetage dans une fente correspondante de la fixation par encliquetage ;
former un joint étanche à la mousse et un joint étanche à l'eau à des soudures définies par des raccords entre les panneaux intérieurs ;
assembler une pluralité de panneaux extérieurs aux panneaux intérieurs avec des fixations coulissantes en introduisant une lèvre de chaque fixation coulissante dans une rainure correspondante de la fixation coulissante, la rainure étant définie au moins en partie par une saillie d'une pluralité de saillies inclinées (2709) définies dans un panneau intérieur respectif ; et
isoler le boîtier d'évaporateur avec une isolation par mousse projetée positionnée à l'intérieur d'une cavité d'isolation définie par et entre la pluralité de panneaux extérieurs et la pluralité de panneaux intérieurs, **caractérisé en ce que** les panneaux extérieurs et les panneaux intérieurs définissent ensemble une pluralité de cavités d'isolation de trop-plein (2794, 2994), dans lequel une nervure verticale (2884, 2984) et un corps de paroi (2850, 2950) d'un panneau intérieur respectif et d'une surface intérieure (2621) du panneau extérieur définissent une cavité d'isolation de trop-plein respective de la pluralité de cavités d'isolation de trop-plein (2794, 2994),
dans lequel l'isolation consiste à faire écouler la mousse projetée de la cavité d'isolation dans la cavité d'isolation de trop-plein respective à travers une paire d'espaces (2708, 2908).

15. Le procédé selon la revendication 14, consistant en outre à :
former une saillie (696) dans un réservoir définissant une partie inférieure du boîtier d'évaporateur, la saillie s'étendant à la verticale et formée de manière monolithique avec le réservoir ;
fixer un interrupteur à flotteur (690) à une monture d'interrupteur à flotteur ; et
fixer la monture d'interrupteur à flotteur à la saillie, la monture d'interrupteur à flotteur étant face à des côtés opposés de la saillie après l'assemblage, l'interrupteur à flotteur étant configuré pour détecter un niveau d'eau dans le réservoir.

16. Le procédé selon la revendication 14 ou la revendication 15, le procédé consistant en outre, à chaque cavité d'isolation de trop-plein de la pluralité de cavités d'isolation de trop-plein (2794, 2994), à :
mettre en contact la surface intérieure du panneau extérieur avec la nervure verticale du panneau intérieur pour définir un joint d'étanchéité primaire ; et
limiter l'écoulement de l'isolation de la cavité d'isolation dans la cavité d'isolation de trop-plein, la cavité d'isolation de trop-plein étant isolée de la cavité d'isolation sauf à travers la paire d'espaces, un premier espace (2708) de la paire d'espaces étant défini à une première extrémité de la nervure verticale au moins en partie par une première saillie inclinée (2709, 2909) et un deuxième espace (2908) de la paire d'espaces définis à une deuxième extrémité de la nervure verticale au moins en partie par une deuxième saillie inclinée (2709, 2909), une surface de la section transversale de la cavité d'isolation de trop-plein à chacun du premier espace et du deuxième espace étant inférieure à une surface de la section transversale de la cavité d'isolation de trop-plein à une position décalée de chacun du premier espace et du deuxième espace.
